# EUROPEAN PATENT APPLICATION

(11) **EP 4 744 844 A1**
(43) Date of publication of application: **20.05.2026**
(21) Application number: 25752468.6
(22) Date of filing: 07.02.2025
(51) Int. Cl.: B25J 15/02, B25J 15/00, B25J 9/16, B25J 19/00, H01R 43/26

(54) **VIBRATION-BASED GRIPPER AND ASSEMBLY METHOD USING SAME**

(30) Priority: 08.02.2024 KR 20240019853; 25.03.2024 KR 20240040145; 10.05.2024 KR 20240061950; 07.06.2024 KR 20240074392; 25.06.2024 KR 20240082385; 15.10.2024 KR 20240140708
(71) Applicant: Korea Institute of Machinery & Materials, Daejeon 34103 (KR)
(72) Inventor: SONG, Sung-Hyuk, Daejeon 34070 (KR); PARK, Dongil, Sejong 30144 (KR); PARK, Jongwoo, Sejong 30062 (KR); SEO, Hyunuk, Seoul 08711 (KR); PARK, Jongcheon, Daejeon 35233 (KR); KIM, Hwisu, Sejong 30153 (KR); AHN, Jeongdo, Daejeon (KR); LEE, Joonho, Daejeon 34078 (KR); HAN, Byoung-Kil, Daejeon 34130 (KR); PARK, Chanhun, Daejeon 35248 (KR); BAK, Jeongae, Daejeon 34109 (KR); LEE, Younghun, Daejeon 34186 (KR); KIM, Byungin, Sejong 30151 (KR); JUNG, Hyunmok, Daejeon 34022 (KR); SEO, Yongsin, Daejeon 34103 (KR); KIM, Minjun, Daejeon 34152 (KR); LEE, Jaeyoung, Daejeon 34032 (KR)
(74) Representative: Lewis Silkin LLP
(86) International application number: PCT/KR2025/001824
(87) International publication number: WO 2025/170358

(57) **Abstract**

In a vibration-based gripper and an assembly method using the gripper, the gripper includes a vibration generating unit and a gripping unit. The vibration generating unit generates vibration, and the gripping unit grips an assembly target object. In a state in which the assembly target object and the gripping unit vibrate due to vibration generated by the vibration generating unit, the assembly target object is self-aligned with a coupling portion and coupled to the coupling portion.

## Description

### BACKGROUND OF THE INVENTION

### TECHNICAL FIELD

Exemplary embodiments of the present invention relate to a vibration-based gripper and an assembly method using the gripper, and more particularly, to a vibration-based gripper and an assembly method using the gripper, in which vibration is applied during an assembly operation such that a separate alignment process may be omitted while enabling precise assembly, a vibration displacement may be automatically reduced in response to an external force applied during the assembly process to minimize damage, and automatic alignment adaptation may be achieved to allow gripping of objects of various types and shapes.

### DISCUSSION OF THE RELATED ART

Technologies related to grippers have been developed in various forms, and in recent years, beyond devices that simply grip a specific object, technologies relating to various grippers capable of performing gripping more effectively by taking into account characteristics of an object to be gripped have been developed.

Meanwhile, in such gripper technologies, it has generally been understood that gripping may be disturbed and accurate gripping may be difficult when vibration occurs during a gripping process or when an unexpected external force is applied. Accordingly, technologies for absorbing external forces or external vibrations during the gripping process have been developed.

However, in certain special environments, technologies that intentionally apply vibration have also been introduced. For example, Japanese Patent No. 7144391 discloses a gripper in which vibration is applied to a gripping pad to vary a shape of an object to be gripped, and Japanese Patent No. 7174399 discloses a technology in which opening or closing of a gripper is driven by an excitation element that vibrates a gripper module.

As described above, although technologies for performing gripping in association with vibration have been developed in some grippers, the occurrence of external forces or vibration during a gripping process has generally been regarded as a factor that interferes with an alignment state between a gripper and an object to be gripped. Accordingly, gripper technologies that apply vibration have been developed only in very limited technical fields.

### SUMMARY

Exemplary embodiments of the present invention provide a vibration-based gripper capable of applying vibration during an assembly operation such that a separate alignment process may be omitted while enabling precise assembly, automatically reducing a vibration displacement in response to an external force applied during an assembly process to minimize damage, and achieving automatic alignment adaptation to allow gripping of objects of various types and shapes.

In addition, exemplary embodiments of the present invention also provide an assembly method using the gripper.

According to one aspect of the present invention, the gripper includes a vibration generating unit and a gripping unit. The vibration generating unit generates vibration, and the gripping unit grips an assembly target object. In a state in which the assembly target object and the gripping unit vibrate due to vibration generated by the vibration generating unit, the assembly target object is self-aligned with a coupling portion and coupled to the coupling portion.

In an exemplary embodiment, the assembly target object may be transferred in a first direction toward the coupling portion to be coupled to the coupling portion, and may vibrate in a third direction.

In an exemplary embodiment, while vibrating in the third direction, the assembly target object may be transferred in a second direction such that alignment in a horizontal direction with respect to the coupling portion is performed.

In an exemplary embodiment, the vibration generating unit may generate vibration simultaneously in second and third directions perpendicular to each other, and the assembly target object may be transferred in the first direction to be coupled to the coupling portion while vibrating simultaneously in the second and third directions.

In an exemplary embodiment, the vibration generating unit may be an electromagnetic-force-based exciter, and a displacement corresponding to a force offset by an electromagnetic force may be induced when an external force is applied.

In an exemplary embodiment, the gripper may further include a transmission unit connected between the vibration generating unit and the gripping unit and configured to transmit vibration generated by the vibration generating unit to the gripping unit.

In an exemplary embodiment, the transmission unit may include a coupling frame connected to the vibration generating unit, a central frame connected to the gripping unit, and an inclined frame connecting the coupling frame and the central frame.

In an exemplary embodiment, the inclined frame may include a pair of inclined frames symmetric to each other, such that the transmission unit may have an overall triangular frame shape.

In an exemplary embodiment, the gripping unit may include a guide frame extending in the third direction, a slide sliding along the guide frame, and a gripping portion configured to grip the assembly target object, fixed to the slide to vibrate in the third direction, and fixed to the central frame.

In an exemplary embodiment, the vibration generating unit may include a pair of first and second excitation portions configured to independently generate vibration.

In an exemplary embodiment, when the first and second excitation portions generate vibration in an identical phase, the assembly target object may vibrate only in a vertical direction and may be coupled to the coupling portion, and when the first and second excitation portions generate vibration in different phases, the assembly target object may rotate about a direction toward the coupling portion as a rotation axis and may be coupled to the coupling portion.

In an exemplary embodiment, the vibration generating unit may further include a connection frame having a first end connected to a first excitation shaft extending from the first excitation portion and a second end connected to a second excitation shaft extending from the second excitation portion, and the first end and the second end of the connection frame may each include a rotatable flexible joint.

In an exemplary embodiment, the transmission unit may include a coupling frame connected to the connection frame, a central frame connected to the gripping unit and having a pair of first and second openings, and first and second rollers coupled to the first and second openings, respectively, and having positions variable within the first and second openings.

In an exemplary embodiment, the gripper may further include a link unit configured to transmit vibration of the vibration generating unit to the gripping unit, and a transmission unit connecting the vibration generating unit and the link unit, wherein the vibration generating unit may be provided in a body portion, and a pair of gripping units may be connected to both sides of the body portion, respectively.

In an exemplary embodiment, each of the gripping units may include a gripping drive portion extending from the body portion, a gripping portion configured to grip an object, and a sliding portion provided between the gripping drive portion and the gripping portion and configured to guide vibration of the gripping portion.

In an exemplary embodiment, the transmission unit may include a front frame to which the vibration generating unit and the link unit are connected, a connection frame extending rearward from the front frame, a central sliding portion provided between the connection frame and the body portion and configured to guide vibration of the connection frame, and a link guide portion connecting both sides of the front frame and the link unit, fixed to the body portion, and configured to guide vibration of the front frame and the link unit.

In an exemplary embodiment, the link unit may include a link portion rotatably connected to the transmission unit, and an extension portion connected between the link portion and the gripping unit.

According to another aspect of the present invention, the gripper includes a driving unit, a suspension unit, and a transmission unit. The driving unit generates a driving force. The suspension unit is connected to the driving unit and converts the driving force into vibration and transmits the vibration. The transmission unit is connected to the suspension unit and transmits the vibration to an assembly target object. Due to the vibration, the assembly target object is aligned with and coupled to a coupling portion while vibrating in a predetermined direction.

In an exemplary embodiment, the driving unit may generate a rotational driving force, and the suspension unit may convert the rotational driving force into linear motion and induce the transmission unit to vibrate.

In an exemplary embodiment, the suspension unit may include an adaptive suspension portion connected between the driving unit and the transmission unit, and a drive guide portion extending from the driving unit and configured to guide a movement direction of the transmission unit.

In an exemplary embodiment, the adaptive suspension portion may include a first connection portion connected to a crank portion of the driving unit, a second connection portion connected to the transmission unit, and an absorption portion extending between the first and second connection portions and configured to absorb an external force transmitted from the transmission unit.

In an exemplary embodiment, the gripper may further include a fixing module configured to fix the assembly target object to an excitation portion that receives vibration transmitted from the vibration generating unit, and the fixing module may include a flexible fixing portion configured to bring the assembly target object into close contact with a lower surface of the excitation portion.

In an exemplary embodiment, the flexible fixing portion may extend from a first side of the excitation portion and be fixed to an insertion portion formed on a second side of the excitation portion, and may absorb vibration of the assembly target object while fixing the assembly target object.

According to still another aspect of the present invention, in an assembly method, an assembly target object is gripped and transferred to a target fastening position. The assembly target object is contacted with a coupling portion in a first direction while vibrating the assembly target object. A gripping portion is transferred and scanned in a second direction. As fastening between the assembly target object and the coupling portion proceeds, a vibration displacement in a third direction is naturally reduced. Fastening is completed, and gripping of the assembly target object is released.

According to some exemplary embodiments of the present invention, by generating vibration in the assembly target object, during a process of coupling the assembly target object to the coupling portion, coupling may be induced while allowing the assembly target object to naturally find an appropriate position by itself without performing a separate alignment operation between the assembly target object and the coupling portion.

Accordingly, particularly for assembly structures in which very fine alignment in a specific direction is required, such as between the assembly target object and the coupling portion, coupling may be easily performed by applying vibration in a direction in which alignment is difficult, while omitting precise alignment.

In this case, by applying vibration not only in a vertical direction corresponding to a third direction but also in a second direction, accurate and easy coupling may be performed without precisely performing alignment along both the third and second directions when coupling the assembly target object to the coupling portion.

As a result, not only assembly target objects having elongated coupling surfaces, but also assembly target objects having rectangular or square coupling surfaces may be immediately and easily coupled without performing separate alignment with respect to the coupling portion, thereby enabling implementation of a system in which coupling is automatically achieved by locating an appropriate position during assembly using the gripper.

Meanwhile, while vibration is performed in the vertical direction to omit a separate alignment operation, the assembly target object may be transferred in a scanning manner in a horizontal direction corresponding to the second direction for alignment, thereby effectively performing alignment at coupling surfaces between the coupling portion and the assembly target object.

In particular, since the vibration generating unit is an electromagnetic-force-based exciter, a displacement corresponding to a force offset by an electromagnetic force may be induced when an external force is applied. Accordingly, even when an external force is generated while the assembly target object is coupled to the coupling portion, the external force may be offset and a vibration displacement may be naturally reduced, thereby minimizing damage or breakage of the vibration generating unit and the gripper.

Further, since a transmission unit is interposed between the gripping unit and the vibration generating unit, vibration generated by the vibration generating unit is transmitted to the gripping unit. In addition, since the gripping unit includes a slide and a guide frame such that a gripping portion configured to grip the assembly target object vibrates in the vertical direction corresponding to the third direction, vibration of the gripper may be effectively implemented.

In addition, the vibration generating unit may include first and second excitation portions configured to generate vibration in different phases. Accordingly, when only alignment in the vertical direction corresponding to the third direction is required, vibration may be generated in an identical phase, and when alignment in a roll direction in addition to the vertical direction is required, vibration may be generated in different phases, thereby inducing natural alignment through rotation. As a result, effective alignment and coupling may be induced even when the assembly target object and the coupling portion are positioned in different orientations.

In this case, vibration having different phases may be effectively transmitted to the gripping unit through the transmission unit. Since the transmission unit has a triangular shape and is connected to a pair of gripping portions of the gripping unit, vibration having different phases may be induced in the gripping portions, thereby inducing rotation of the assembly target object in the roll direction and facilitating alignment through rotation.

Furthermore, since a pair of gripping units extend from both sides of a body portion to grip an object located at a center, various objects may be effectively gripped regardless of sizes or shapes of the objects. In addition, while gripping the object, the gripping units vibrate due to vibration generated by the vibration generating unit, and through such vibration, effective coupling may be performed while omitting precise alignment of the object with respect to a target coupling portion.

Further, since the vibration generating unit is provided at a center of the body portion and vibration generated by a single vibration generating unit is transmitted simultaneously to link units on both sides through the transmission unit, vibration may be transmitted to gripping portions on both sides at an identical frequency. Accordingly, vibration may be induced in the object while maintaining overall gripping stability in a state in which the gripping portions grip the object.

As described above, through a gripping unit that rotates about a second direction as a rotation center axis and a gripping unit that vibrates along the second direction, effective gripping of objects having various shapes and sizes may be achieved. In addition, by applying vibration to the object, the object may be accurately fastened to a predetermined target coupling portion while omitting precise alignment to a certain extent.

### BRIEF DESCRIPTION OF THE DRAWINGS

FIG. 1 is a perspective view illustrating a gripper according to an example embodiment of the present invention;
FIG. 2 is a side view illustrating the gripper of FIG. 1;
FIG. 3 is a front view illustrating another example of the gripper of FIG. 1;
FIG. 4 is a front view illustrating a gripper according to another example embodiment of the present invention;
FIG. 5 is a front view illustrating a gripper according to still another example embodiment of the present invention;
FIG. 6 is a perspective view illustrating a gripper according to still another example embodiment of the present invention;
FIG. 7 is an enlarged front view illustrating the gripper of FIG. 6;
FIG. 8A to FIG. 8C are front views illustrating steps of fixing an assembly target object using the gripper of FIG. 6;
FIG. 9 and FIG. 10 are perspective views illustrating a gripper according to still another example embodiment of the present invention;
FIG. 11 is a perspective view illustrating a transmission unit and a gripping unit of the gripper of FIG. 9 in detail;
FIG. 12A and FIG. 12B are schematic views illustrating a state in which a connector is coupled to a coupling portion using the gripper of FIG. 9;
FIG. 13 is a flowchart illustrating an assembly method using the gripper of FIG. 9;
FIG. 14A to FIG. 14D are schematic views for explaining the assembly method of FIG. 13;
FIG. 15 is a front perspective view illustrating a vibration-based gripper according to still another example embodiment of the present invention;
FIG. 16 is a rear perspective view illustrating the gripper of FIG. 15;
FIG. 17 and FIG. 18 are perspective views illustrating a transmission unit and a gripping unit of the gripper of FIG. 15 in detail;
FIG. 19A and FIG. 19B are a front view and a rear view illustrating a state in which the gripper of FIG. 15 is rotated;
FIG. 20 is an enlarged front view illustrating a state in which the gripper of FIG. 15 moves in a vertical direction;
FIG. 21 is a rear perspective view illustrating a gripper according to still another example embodiment of the present invention;
FIG. 22 is a front perspective view illustrating the gripper of FIG. 21;
FIG. 23A to FIG. 23C are perspective views sequentially illustrating an operating state of the gripper of FIG. 21;
FIG. 24 is a perspective view illustrating a gripper according to still another example embodiment of the present invention;
FIG. 25 is a perspective view illustrating the gripper of FIG. 24 from another direction;
FIG. 26 and FIG. 27 are perspective views illustrating the gripper of FIG. 24 from still another direction;
FIG. 28A and FIG. 28B are a perspective view and a side view illustrating a state in which vibration is applied and an object is coupled to a target coupling portion while being gripped by the gripper of FIG. 24; and
FIG. 29 is a perspective view illustrating a state in which another object is gripped using the gripper of FIG. 24.

### DETAILED DESCRIPTION OF THE INVENTION

The present invention may be embodied in various forms and may be modified in various ways, and therefore example embodiments will be described in detail in the specification. However, the present invention is not intended to be limited to the specific embodiments disclosed herein, and it should be understood that the present invention includes all modifications, equivalents, and alternatives falling within the spirit and technical scope of the present invention. In describing the drawings, like reference numerals are used to designate like or corresponding elements throughout the specification. Terms such as first and second may be used to describe various elements, but such elements should not be limited by these terms.

These terms are used only for the purpose of distinguishing one element from another. As used herein, terms are employed only to describe specific example embodiments and are not intended to limit the present invention. Unless clearly indicated otherwise by the context, singular forms are intended to include plural forms as well.

As used herein, terms such as "include" or "comprise" are intended to specify the presence of stated features, numbers, steps, operations, elements, components, or combinations thereof, but do not preclude the presence or addition of one or more other features, numbers, steps, operations, elements, components, or combinations thereof.

Unless otherwise defined, all terms including technical and scientific terms used herein have the same meanings as commonly understood by those skilled in the art to which the present invention pertains. Terms defined in generally used dictionaries should be interpreted as having meanings consistent with their meanings in the context of the relevant art, and should not be interpreted in an idealized or overly formal sense unless expressly defined in the present invention.

Hereinafter, the present invention will be explained in detail with reference to the accompanying drawings.

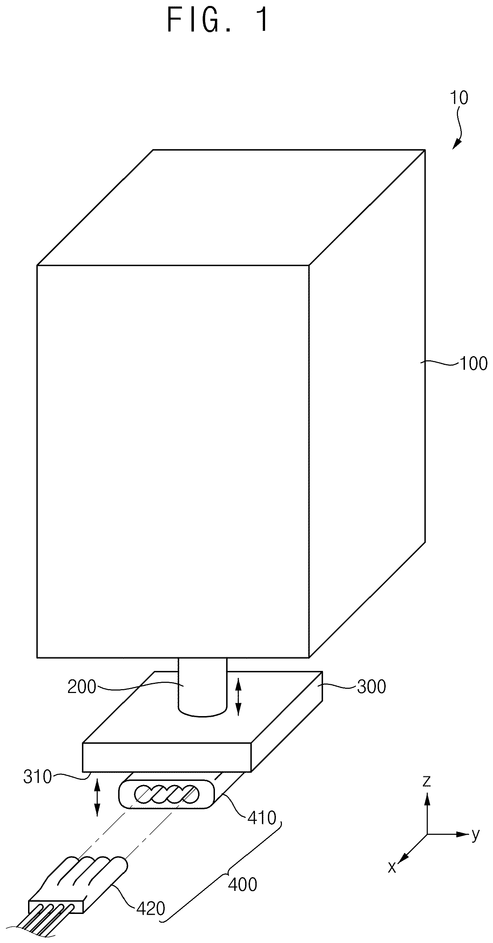

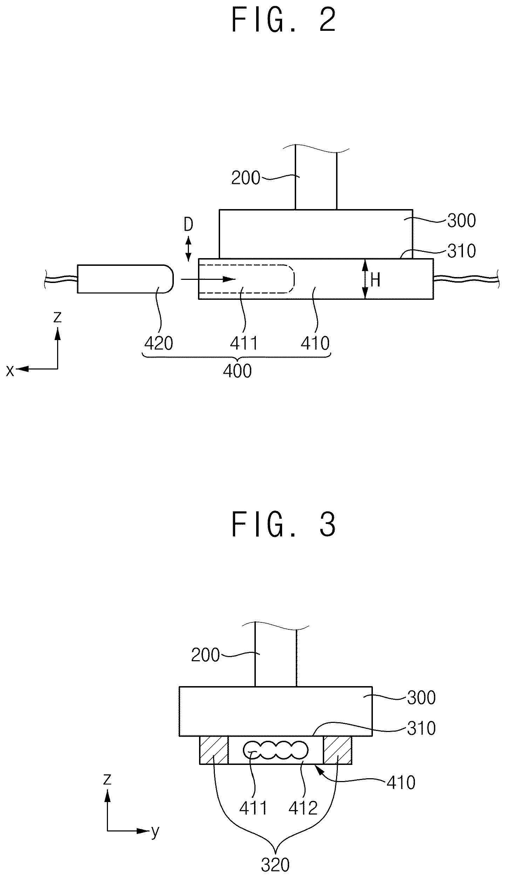

FIG. 1 is a perspective view illustrating a gripper according to an example embodiment of the present invention. FIG. 2 is a side view illustrating the gripper of FIG. 1.

Referring to FIG. 1 and FIG. 2, a gripper 10 according to the present example embodiment of the present invention includes a vibration generating unit 100, a transmission unit 200, and an excitation portion 300.

As illustrated, the vibration generating unit 100 may have a rectangular block shape, and a vibration generating element configured to generate vibration may be disposed therein. However, the shape or structure of the vibration generating unit 100 is not limited to the illustrated example.

By the vibration generating element provided in the vibration generating unit 100, vibration along a second direction Y is generated, and the generated vibration is transmitted to the excitation portion 300 through the transmission unit 200.

As illustrated, the transmission unit 200 may be a structure such as an elongated bar extending between the vibration generating unit 100 and the excitation portion 300. Due to vibration generated by the vibration generating unit 100, the transmission unit 200 vibrates along a third direction Z, as indicated by arrows.

The excitation portion 300 is fixed to a lower end of the transmission unit 200, and as illustrated, may have a rectangular block shape or a rectangular frame shape having a predetermined area. The excitation portion 300 may be integrally formed with the transmission unit 200, such that vibration of the transmission unit 200 along the third direction Z is directly transmitted to the excitation portion 300.

The excitation portion 300 includes a fixing surface 310 having a predetermined area, and as illustrated, the fixing surface 310 corresponds to a lower surface of the excitation portion 300.

In this case, a size or shape of the fixing surface 310 of the excitation portion 300 may be variously designed, and it is sufficient that the fixing surface 310 is designed in consideration of a size or shape of an assembly target object 410 fixed thereto.

The assembly target object 410, together with a coupling portion 420, constitutes an assembly unit 400, and corresponds to components that are assembled to each other by the gripper 10 in the present example embodiment. In this case, the assembly unit 400 may be, for example, a connector, the assembly target object 410 may be a connector holder, and the coupling portion 420 may be a connector.

That is, the assembly target object 410 includes a coupling groove 411 formed in a groove shape on a coupling surface 412 (see FIG. 3), and the coupling portion 420 is inserted into the coupling groove 411, such that the coupling portion 420 and the assembly target object 410 are coupled to each other.

Although an example in which four coupling grooves 411 are formed is illustrated in the drawings, the number, structure, or shape of the coupling grooves 411 may be variously modified, and it is sufficient that the coupling portion 420 is inserted into the assembly target object 410 to be assembled thereto.

Furthermore, although the drawings illustrate an example in which the assembly target object 410 is fixed on the excitation portion 300 and the coupling portion 420 is inserted from outside into the assembly target object 410, alternatively, the coupling portion 420 may be fixed on the excitation portion 300 and vibrated, and inserted into the assembly target object 410 positioned outside to be assembled thereto.

The assembly target object 410 is fixed such that an upper surface thereof is fixed on the fixing surface 310, and a fixing method of the assembly target object 410 is not limited. That is, the assembly target object 410 may be fixed to the fixing surface 310 by a separate adhesive member not illustrated, or a fixing groove not illustrated may be formed on the fixing surface 310 and the upper surface of the assembly target object 410 may be inserted into the fixing groove to be fixed. Further, a magnetic member may be interposed between the fixing surface 310 and the assembly target object 410, such that the assembly target object 410 is fixed by magnetic force.

As described above, in a state in which the upper surface of the assembly target object 410 is fixed on the fixing surface 310, the assembly target object 410 vibrates together due to vibration of the excitation portion 300. That is, the assembly target object 410 may be regarded as being integrally formed with the excitation portion 300, and accordingly, vibration of the excitation portion 300 along the third direction Z is directly transmitted to the assembly target object 410, such that the assembly target object 410 vibrates in the third direction Z.

In this case, a vibration range or a vibration frequency of the assembly target object 410 may be variously controlled. For example, based on a height H, that is, a thickness of the assembly target object 410, vibration may be applied such that the assembly target object 410 vibrates with a displacement D corresponding to 1.5 to 3 times the height H in the third direction Z.

That is, the assembly target object 410 may perform reciprocating vibration within a range of 1.5 to 3 times the height H and reciprocally move along the third direction Z.

In this case, a vibration frequency of the assembly target object 410 may be variously set in consideration of a degree of alignment required between the assembly target object 410 and the coupling portion 420, for example, a size of the coupling groove 411.

As described above, due to vibration of the excitation portion 300 along the third direction Z, the assembly target object 410 also vibrates along the third direction Z with a predetermined displacement D.

In a state in which the assembly target object 410 vibrates along the third direction Z, when the coupling portion 420 approaches the assembly target object 410 or alternatively when the assembly target object 410 approaches the coupling portion 420, the coupling portion 420 and the assembly target object 410 are naturally aligned along the third direction Z and are coupled to each other by finding appropriate positions by themselves.

That is, due to repetitive vibration along the third direction Z, the assembly target object 410 repeatedly passes positions at which alignment between the assembly target object 410 and the coupling portion 420 is achieved along the third direction Z. In this process, when the coupling portion 420 and the assembly target object 410 approach and contact each other, the coupling portion 420 is inserted into the coupling groove 411 of the assembly target object 410 along a first direction X at the aligned position.

In this case, the first direction X is a direction perpendicular to the third direction Z, and together with the second direction Y, forms a plane along which the fixing surface 310 extends.

Accordingly, in a process of assembling the assembly target object 410 with the coupling portion 420, alignment between the assembly target object 410 and the coupling portion 420 along the third direction Z may be omitted, and alignment along the third direction Z is naturally achieved by the vibration.

Meanwhile, since vibration is not generated along the second direction Y perpendicular to the third direction Z, in the assembly process of the assembly unit 400, alignment between the coupling portion 420 and the assembly target object 410 along the second direction Y is performed in advance.

FIG. 3 is a front view illustrating another example of the gripper of FIG. 1.

Referring to FIG. 3, a gripping portion 320 may be additionally provided on the fixing surface 310 of the excitation portion 300.

That is, the gripping portion 320 may be positioned at both side surfaces of the assembly target object 410 to fix the assembly target object 410 such that movement thereof in the second direction Y is restricted.

As described above, the assembly target object 410 vibrates only along the third direction Z due to vibration of the excitation portion 300, and vibration is not generated along the second direction Y. Accordingly, alignment between the assembly target object 410 and the coupling portion 420 is required along the second direction Y.

However, even when the assembly target object 410 and the coupling portion 420 are aligned with each other along the second direction Y, the aligned state may be disturbed by vibration along the third direction Z. Therefore, the gripping portion 320 may be provided to support both side surfaces of the assembly target object 410, such that the assembly target object 410 is prevented from moving in the second direction Y even while vibrating along the third direction Z.

Through this configuration, while the alignment state along the second direction Y is maintained, the coupling portion 420 and the assembly target object 410 may find appropriate positions by themselves and be coupled to each other only through vibration along the third direction Z.

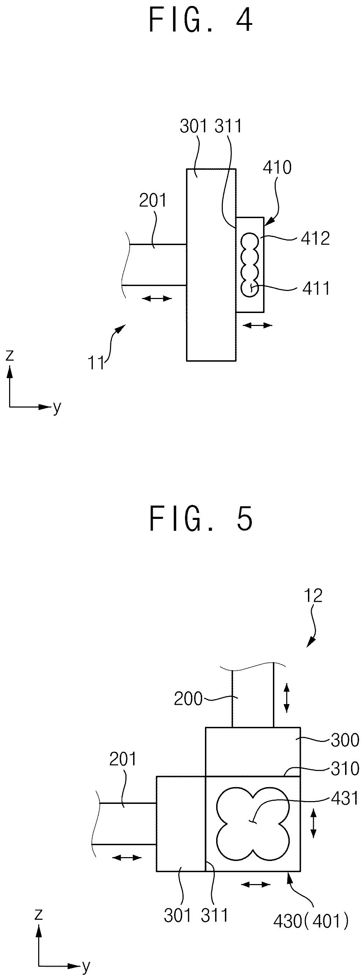

FIG. 4 is a front view illustrating a gripper according to another example embodiment of the present invention,

In the gripper 11 according to the present example embodiment, except that a vibration generating direction of an excitation portion 301 and a vibration direction of an assembly target object 410 corresponding thereto are different, the gripper 11 is substantially the same as the gripper 10 described with reference to FIG. 1 to FIG. 3, and thus redundant descriptions will be omitted.

Referring to FIG. 4, in the gripper 11 according to the present example embodiment, vibration is generated in the second direction Y by a vibration generating unit, and vibration in the second direction Y is transmitted through a transmission unit 201. Accordingly, the excitation portion 301 also vibrates in the second direction Y.

In this case, vibration of the excitation portion 301 in the second direction Y may have the same vibration amplitude and vibration frequency as vibration of the excitation portion 300 described with reference to FIG. 1 to FIG. 3, except that only the vibration direction is different in that the vibration direction is horizontal.

Further, as the excitation portion 301 vibrates in the second direction Y, a position of the assembly target object 410 fixed to a fixing surface 311 is changed accordingly.

As generally illustrated in FIG. 1 and FIG. 4, the assembly target object 410 has a coupling surface 412 having an elongated rectangular shape, in which a length of a first side edge may be greater than a length of a second side edge. That is, the coupling surface 412 may have a rectangular shape elongated in a longitudinal direction.

Accordingly, in FIG. 1, a surface of the assembly target object 410 elongated in the longitudinal direction is attached to the fixing surface 310, such that a relatively larger surface among surfaces of the assembly target object 410 is attached to the fixing surface 310, thereby enabling more stable fixation. In this case, the assembly target object 410 is disposed in a horizontally elongated manner.

In contrast, in FIG. 4, the fixing surface 311 extends along the third direction Z, and accordingly, a relatively larger surface of the assembly target object 410 is attached to the fixing surface 311. As a result, as illustrated, the assembly target object 410 is fixed on the fixing surface 311 in a vertically standing state.

In this state, vibration is applied to the assembly target object 410 in the second direction Y. In this case, while separate alignment between the assembly target object 410 and the coupling portion 420 is not required along the second direction Y, alignment between the assembly target object 410 and the coupling portion 420 needs to be performed in advance along the third direction Z. Accordingly, the assembly target object 410 and the coupling portion 420 may find appropriate positions by themselves and be assembled with each other.

That is, as in the present example embodiment, the assembly target object 410 may be fixed on the fixing surface 310 of the excitation portion 301 such that the coupling surface 412 of the assembly target object 410 is elongated in a vertical direction rather than a horizontal direction. In such a fixed state, vibration is applied to the assembly target object 410 in the second direction Y, and the assembly target object 410 may find an appropriate position by itself and be assembled with the coupling portion 420 in a state in which alignment along the second direction Y is omitted.

As described above, in consideration of a shape of the assembly target object 410 and a required alignment direction, vibration may be selectively applied to the assembly target object 410 in one of the second direction Y and the third direction Z. Accordingly, assembly with the coupling portion 420 may be performed while omitting separate alignment with respect to one selected direction.

FIG. 5 is a front view illustrating a gripper according to still another example embodiment of the present invention.

In the gripper 12 according to the present example embodiment, except for a shape of an assembly target object 401 and simultaneous vibration of excitation portions 300 and 301, the gripper 12 is substantially the same as the gripper 10 described with reference to FIG. 1 to FIG. 3, and thus redundant descriptions will be omitted.

Referring to FIG. 5, in the gripper 12 according to the present example embodiment, a coupling surface 432 of the assembly target object 401 has an overall square shape, and the excitation portions 300 and 301 apply vibration in both a second direction Y and a third direction Z.

First, in the case of the assembly target object 401, as illustrated, a length of an edge along the second direction Y and a length of an edge along the third direction Z may be identical or substantially similar. That is, unlike the coupling surface 412 elongated in a longitudinal direction as described with reference to FIG. 1 and FIG. 4, the coupling surface 432 may be formed to have an overall square shape.

Of course, even in a case in which the coupling surface 432 has such a square shape, as described with reference to FIG. 1 and FIG. 4, the assembly target object 401 may be fixed to one of the excitation portions 300 and 301 and vibrated only in one of the third direction Z and the second direction Y.

However, in the present example embodiment, the assembly target object 401 is vibrated in both the third direction Z and the second direction Y by vibration of a first excitation portion 300 and a second excitation portion 301.

That is, a first surface of the assembly target object 401 is fixed to a first fixing surface 310 of the first excitation portion 300, and a second surface of the assembly target object 401 is fixed to a second fixing surface 311 of the second excitation portion 301.

Accordingly, vibration applied in the third direction Z through the first excitation portion 300 and vibration applied in the second direction Y through the second excitation portion 301 are both transmitted to the assembly target object 401. As a result, the assembly target object 401 vibrates in both the second and third directions Y and Z.

Meanwhile, as described above, ranges or frequencies of vibration in each of the second and third directions Y and Z may be substantially the same as ranges or frequencies of vibration in the third direction Z described with reference to FIG. 1.

In addition, in the present example embodiment, since the assembly target object 401 vibrates in both the second and third directions Y and Z as described above, the assembly target object 401 and the coupling portion 420 do not need to be aligned in advance with respect to both the second and third directions Y and Z.

That is, the coupling portion 420 and the assembly target object 401 may find positions aligned with each other along the second direction Y by vibration in the second direction Y, and similarly, may find positions aligned with each other along the third direction Z by vibration in the third direction Z.

Accordingly, as the coupling portion 420 and the assembly target object 401 move to approach each other along a first direction X, the coupling portion 420 and the assembly target object 401 may be naturally assembled with each other while being self-aligned with respect to both the second and third directions Y and Z.

Of course, application of vibration in both the second and third directions Y and Z may also be applied to a case in which a coupling surface of an assembly target object has an elongated rectangular shape as described with reference to FIG. 1 and FIG. 4.

However, in order to achieve more stable fixation and uniformly transmit stable vibration in both directions, it may be more desirable that the assembly target object has a square shape as illustrated in FIG. 5, or a rectangular shape in which lengths of adjacent edges are similar or do not differ significantly.

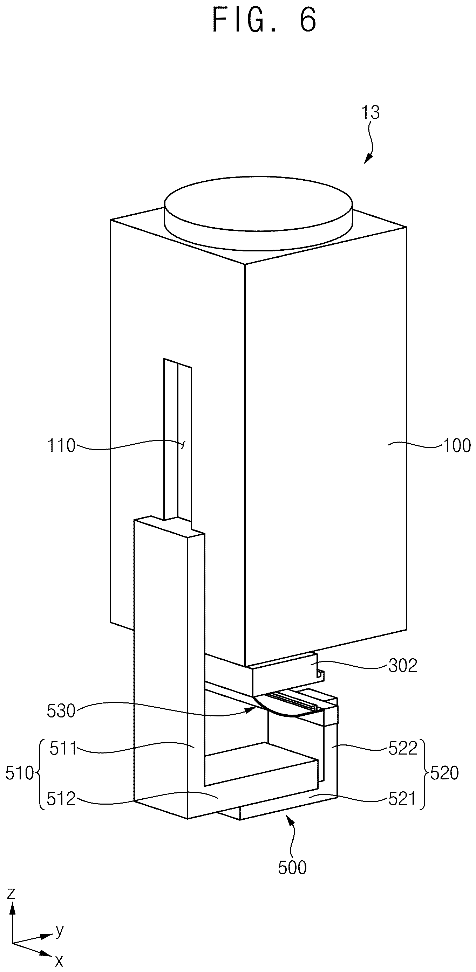

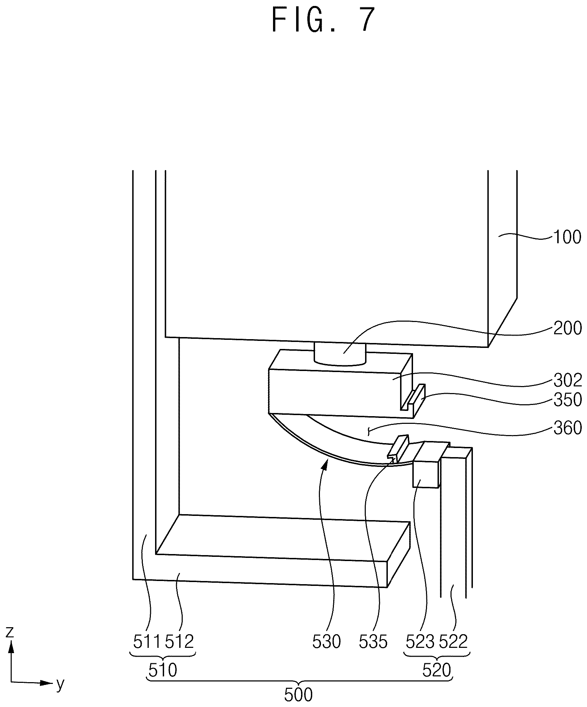

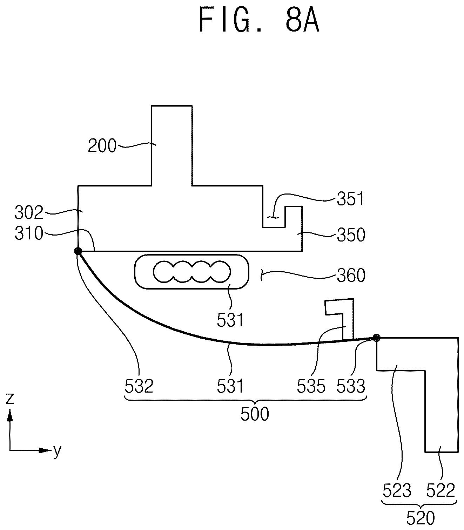

FIG. 6 is a perspective view illustrating a gripper according to still another example embodiment of the present invention. FIG. 7 is an enlarged front view illustrating the gripper of FIG. 6. FIG. 8A to FIG. 8C are front views illustrating steps of fixing an assembly target object using the gripper of FIG. 6.

The gripper 13 according to the present example embodiment is substantially the same as the gripper 10 described with reference to FIG. 1, except that the gripper 13 further includes a fixing module 500. Accordingly, the same reference numerals are used for the same components, and redundant descriptions will be omitted.

Referring to FIG. 6 to FIG. 8C, in the gripper 13 according to the present example embodiment, the fixing module 500 is additionally provided, and configurations of the vibration generating unit 100, the transmission unit 200, and an excitation portion 302 described above are the same. Accordingly, description of vibration of the excitation portion 302 and coupling of the assembly unit 400 based thereon will be omitted. However, a shape of the excitation portion 302 is partially modified, which will be described below.

In the gripper 10 of FIG. 1, the assembly target object 410 may be attached to the fixing surface 310 of the excitation portion 300 using an attachment unit, a fixing groove, magnetic force, or the like. However, in such attachment methods, fixing force may be weakened by applied vibration, and stable fixation of the assembly target object 410 may become difficult.

Accordingly, in the present example embodiment, the fixing module 500 is additionally provided to increase fixing force of the assembly target object 410 with respect to the excitation portion 300.

Specifically, the fixing module 500 includes a vertical moving portion 510, a fixing frame 520, and a fixing portion 530.

The vertical moving portion 510 moves overall along the third direction Z to induce fixation and release of fixation of the assembly target object 410 by the fixing module 500.

The vertical moving portion 510 includes a sliding frame 511 and a vertical transfer frame 512.

As illustrated, the sliding frame 511 extends along the third direction Z and is coupled to a guide groove 110 formed along the third direction Z on one surface of the vibration generating unit 100. Accordingly, the sliding frame 511 slides along the guide groove 110 in the third direction Z. The sliding frame 511 may move upward along the third direction Z to fix the assembly target object 410, and may move downward along the third direction Z to release fixation of the assembly target object 410.

The vertical transfer frame 512 extends along the second direction Y from a lower end of the sliding frame 511. Accordingly, the vertical moving portion 510 may have an overall L-shaped configuration.

As a result, the vertical transfer frame 512 moves together in upward and downward directions along the third direction Z in accordance with sliding movement of the sliding frame 511.

The fixing frame 520 is connected to the vertical moving portion 510 and moves the fixing portion 530. The fixing frame 520 includes a horizontal fixing frame 521 and a vertical fixing frame 522.

The horizontal fixing frame 521 is connected to the vertical transfer frame 512 and extends by a predetermined length along the second direction Y, and the vertical fixing frame 522 extends by a predetermined length along the third direction Z from an end of the horizontal fixing frame 521. Accordingly, the fixing frame 520 may also have an overall L-shaped configuration.

In this case, the fixing frame 520 moves integrally with the vertical moving portion 510. When the vertical moving portion 510 moves downward along the third direction Z, the fixing frame 520 also moves downward, and when the vertical moving portion 510 moves upward, the fixing frame 520 also moves upward.

Meanwhile, the fixing frame 520 may further include an extension frame 523 formed at an end of the vertical fixing frame 522, and the fixing portion 530 is fixed to the extension frame 523.

In this case, the extension frame 523 may be a frame configured to precisely position the fixing portion 530 in consideration of a position of an insertion portion 351 formed in the excitation portion 302.

The fixing portion 530 fixes the assembly target object 410 on the fixing surface 310 of the excitation portion 302, and includes a flexible fixing portion 531, a first fixing portion 532, a second fixing portion 533, and a fixing block 535.

A first end of the flexible fixing portion 531 is fixed to a first side of the excitation portion 302 through the first fixing portion 532, and a second end of the flexible fixing portion 531 is fixed to the extension frame 523 through the second fixing portion 533.

As illustrated in FIG. 8A, a first end of the flexible fixing portion 531 is rotatably connected to a first side of the excitation portion 302 through the first fixing portion 532. Similarly, the other end of the flexible fixing portion 531 is rotatably connected to a second side of the excitation portion 302 through the second fixing portion 533.

In this case, the flexible fixing portion 531 may be in the form of a substrate having flexibility and elasticity, and may have a structure extending while being bent with a predetermined area from the first fixing portion 532 toward the second fixing portion 533.

The fixing block 535 is fixed at a position adjacent to the other end of the flexible fixing portion 531. As illustrated, the fixing block 535 has an L-shaped cross-section and may be coupled to the insertion portion 351 formed in the excitation portion 302.

The excitation portion 302 transmits vibration transmitted through the transmission unit 200 to the assembly target object 410. In the present example embodiment, as illustrated, a protrusion 350 is formed at a second side edge of the excitation portion 302 to form the insertion portion 351.

That is, the protrusion 350 has a hook-shaped cross-section such that the insertion portion 351 is formed as a groove having a predetermined depth on a second side edge of the excitation portion 302. Accordingly, the fixing block 535 is inserted into and positioned in the insertion portion 351, and through this configuration, the flexible fixing portion 531 provides fixing force to the assembly target object 410.

A fixing method of the assembly target object 410 using the fixing module 500 will be described as follows.

First, referring to FIG. 8A, in an initial state, the vertical moving portion 510 is positioned at a relatively lower side. Accordingly, the fixing frame 520 is also positioned at a lower side of the assembly target object 410. In addition, although the flexible fixing portion 531 extends between the first fixing portion 532 and the second fixing portion 533, since the extension frame 523 of the fixing frame 520 is positioned relatively lower, a fixing space 360 is formed between the flexible fixing portion 531 and the fixing surface 310 of the excitation portion 302.

Accordingly, the assembly target object 410 may be positioned in contact with the fixing surface 310 through the fixing space 360.

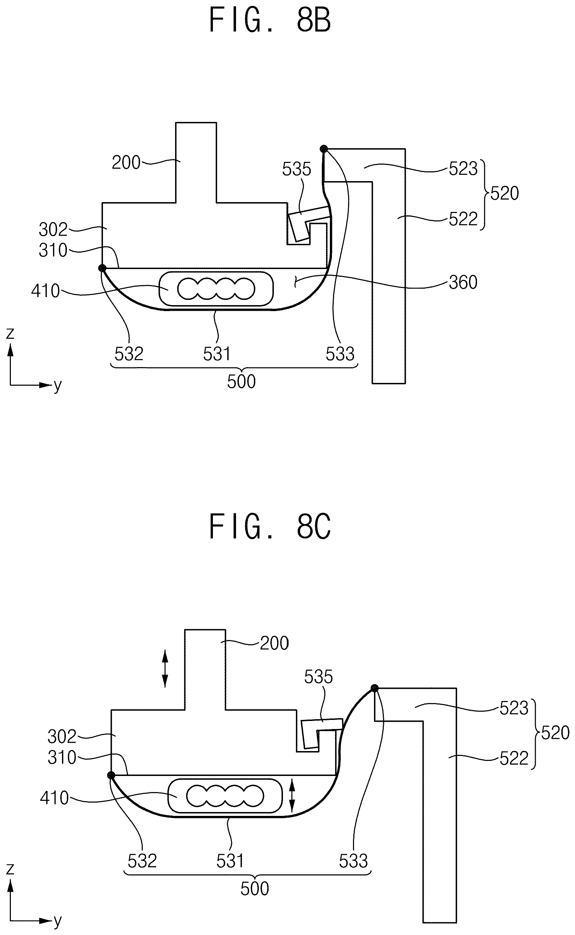

Thereafter, referring to FIG. 8B, when the vertical moving portion 510 moves upward along the third direction Z, the fixing frame 520 fixed thereto also moves upward along the third direction Z. When the vertical moving portion 510 is moved until the extension frame 523 is positioned above the excitation portion 302, as illustrated, the flexible fixing portion 531 contacts a lower surface of the assembly target object 410 and extends.

That is, while a first end of the flexible fixing portion 531 remains fixed to the first fixing portion 532, the flexible fixing portion 531 extends while contacting the lower surface of the assembly target object 410, and a second end of the flexible fixing portion 531 is positioned above the excitation portion 302 along the extension frame 523.

Accordingly, as illustrated, the flexible fixing portion 531 extends in an overall U-shape to support the lower surface of the assembly target object 410, and through this configuration, the assembly target object 410 is more stably fixed on the fixing surface 310.

Meanwhile, in this state, the fixing block 535 positioned at the other end side of the flexible fixing portion 531 is inserted into the insertion portion 351. In particular, since the fixing block 535 has an L-shaped cross-section, the fixing block 535 maintains a stable inserted state in the insertion portion 351.

Thereafter, referring to FIG. 8C, when the excitation portion 302 vibrates along the third direction Z, the assembly target object 410 also vibrates along the third direction Z. Even when such vibration occurs, the assembly target object 410 is stably supported by the flexible fixing portion 531 and maintains a stable contact state with the fixing surface 310.

In this case, as illustrated, when vibration occurs, the excitation portion 302 vibrates, and accordingly, a position of the fixing frame 520 relative to the excitation portion 302 may vary along the third direction Z. However, regardless of such relative positional variation of the fixing frame 520 with respect to the excitation portion 302, the fixing block 535 having an L-shaped cross-section maintains a stable inserted and fixed state in the insertion portion 351.

Accordingly, the flexible fixing portion 531 may stably maintain a fixing state of the assembly target object 410 as illustrated in FIG. 8C.

Thereafter, although not illustrated, when assembly of the assembly target object 410 and the coupling portion 420 is completed, the fixing frame 520 may be moved to a position higher than the excitation portion 302 to remove the fixing block 535 from the insertion portion 351, and the flexible fixing portion 531 may be repositioned to a lower side of the assembly target object 410 to return to the initial state as illustrated in FIG. 8A.

As described above, assembly of the assembly unit 400 may be performed in a state in which the assembly target object 410 is more stably fixed through the fixing module 500.

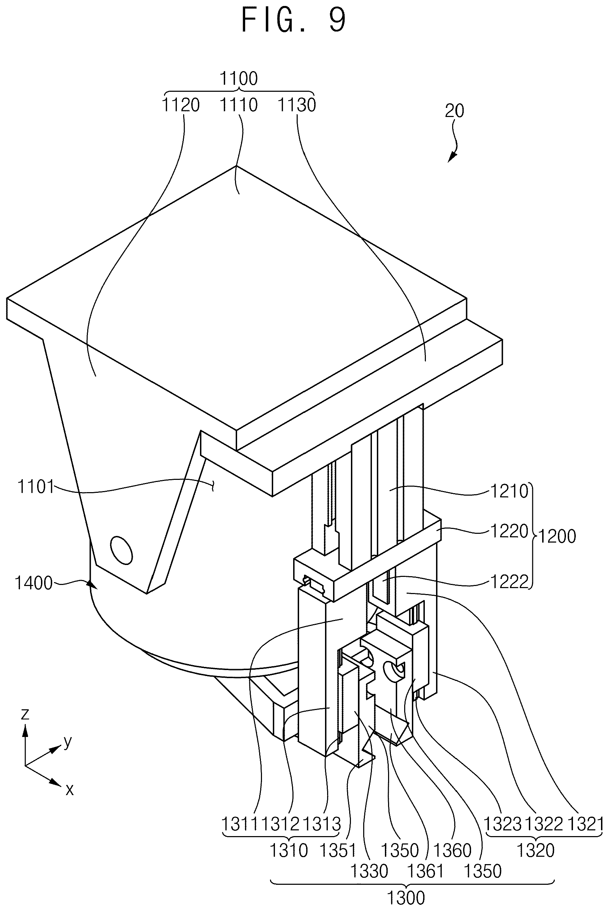

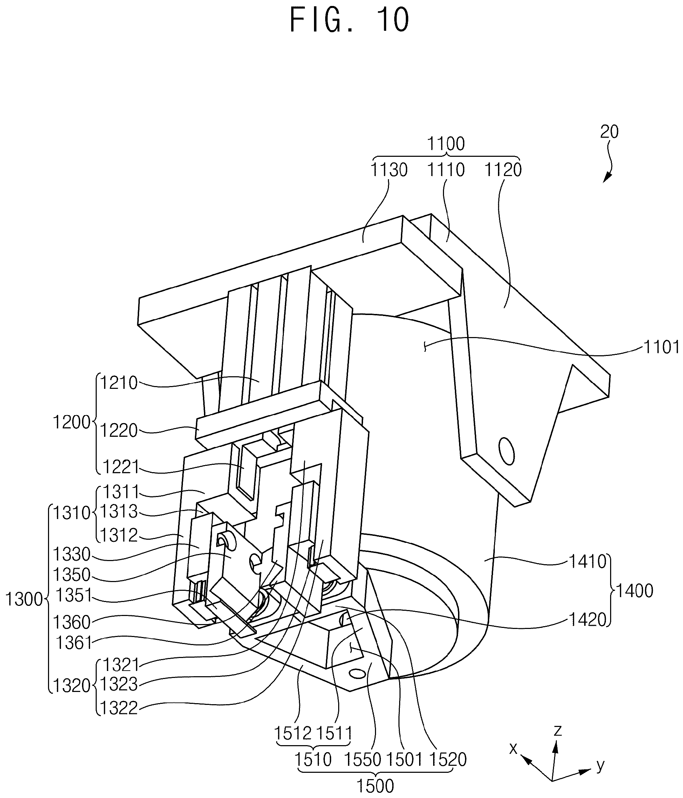

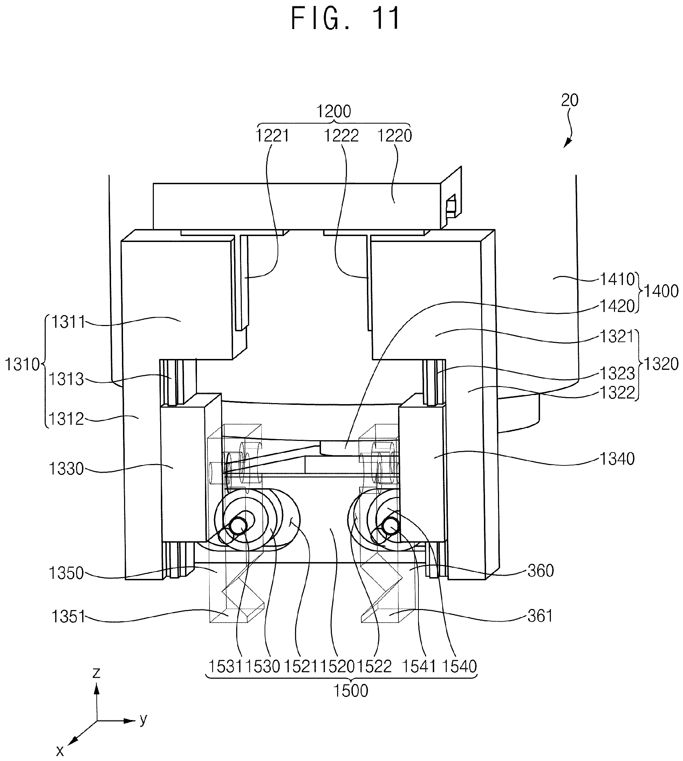

FIG. 9 and FIG. 10 are perspective views illustrating a gripper according to still another example embodiment of the present invention. FIG. 11 is a perspective view illustrating a transmission unit and a gripping unit of the gripper of FIG. 9 in detail.

Referring to FIG. 9 to FIG. 11, a gripper 20 according to the present example embodiment includes a frame unit 1100, a fixing unit 1200, a gripping unit 1300, a vibration generating unit 1400, and a transmission unit 1500.

The frame unit 1100 forms an upper frame structure of the gripper 20, and may be formed in various frame structures other than the illustrated structure. In particular, although not illustrated, the frame unit 1100 may be mounted to an external structure, an end of a robot arm, a manipulator, or the like, and it is apparent that a design or structure thereof may vary depending on a structure to which the frame unit 1100 is mounted.

Accordingly, the gripper 20 may be mounted to the robot arm, the manipulator, or the like, and may fasten an assembly target object to a coupling portion while performing a predetermined movement or operation, as will be described below.

Hereinafter, as one example of a design of the frame unit 1100, shapes and structures illustrated in the drawings will be described. However, except for a structure in which the fixing unit, the gripping unit, and further the vibration generating unit are fixed to a lower portion, detailed shapes or structures are not limited to the illustrated example.

The frame unit 1100 includes a horizontal frame 1110, a vertical frame 1120, and an auxiliary frame 1130.

The horizontal frame 1110 is a frame structure extending along a plane defined by a first direction X and a second direction Y, that is, an XY plane, and an area thereof may vary in consideration of sizes or structures of the fixing unit 1200 and the vibration generating unit 1400 mounted below.

Although not illustrated, a mounting portion having a groove, a hole, or another fastening structure to which an external structure, an end of a robot arm, or a manipulator may be mounted may be formed at a center of the horizontal frame 1110.

The vertical frame 1120 extends downward along a third direction Z from both ends of the horizontal frame 1110, and forms, together with the horizontal frame 1110, a receiving space 1101 at a lower portion. In addition, the vibration generating unit 1400 described below is disposed in the receiving space 1101.

In this case, the first to third directions X, Y, and Z define a space and are directions perpendicular to each other.

The auxiliary frame 1130 is a frame shape positioned at a first side of the horizontal frame 1110, and the fixing unit 1200 described below is fixed to a lower side thereof. In this case, the auxiliary frame 1130 may be omitted, and when the auxiliary frame 1130 is omitted, the fixing unit 1200 may be directly fixed to a lower surface of the horizontal frame 1110.

The fixing unit 1200 extends downward from the auxiliary frame 1130. Since the auxiliary frame 1130 is formed at a front end of the horizontal frame 1110, the fixing unit 1200 is fixed to the front end of the horizontal frame 1110. In addition, the fixing unit 1200 extends by a predetermined length along the third direction Z and corresponds to a frame structure to which the gripping unit 1300 described below is fixed.

That is, the fixing unit 1200 includes a vertical fixing portion 1210, a horizontal fixing portion 1220, and fixing portions 1221 and 1222, and the gripping unit 1300 is connected to a lower surface thereof. As described above, the fixing unit 1200 extends to maintain a predetermined distance between a mounting position of the gripping unit 1300 and the frame unit 1100. As the fixing unit 1200 is formed to extend by a predetermined length as described above, a space in which the vibration generating unit 1400 having a predetermined length may be disposed is provided in the receiving space 1101 formed at a rear side of the fixing unit 1200.

Accordingly, an extending length of the fixing unit 1200 may be selected in consideration of a length or size of the vibration generating unit 1400.

The vertical fixing portion 1210 is a frame having a first end connected to the auxiliary frame 1130 and extending downward by a predetermined length along the third direction Z. As described above, an extending length of the vertical fixing portion 1210 may be variably designed in consideration of a size or length of the vibration generating unit 1400.

The horizontal fixing portion 1220 is fixed to a second end of the vertical fixing portion 1210 and is a frame extending by a predetermined length along the second direction Y. In this case, a length of the horizontal fixing portion 1220 may be variably designed in consideration of a separation distance between a pair of gripping portions 1350 and 1360 of the gripping unit 1300 described below.

The fixing portions 1221 and 1222 extend as a pair from a lower surface of the horizontal fixing portion 1220 and extend by a predetermined length along the third direction Z. Accordingly, a pair of guide frames 1310 and 1320 of the gripping unit 1300 are respectively mounted to the pair of fixing portions 1221 and 1222.

The fixing portions 1221 and 1222 move along the second direction Y in a state in which the guide frames 1310 and 1320 are fixed thereto. That is, the pair of fixing portions 1221 and 1222 are connected to the lower surface of the horizontal fixing portion 1220 to be slidable, and accordingly, a distance between the pair of fixing portions 1221 and 1222 may be variously controlled by separate driving control.

Accordingly, as positions of the pair of fixing portions 1221 and 1222 are varied by sliding along the second direction Y on the lower surface of the horizontal fixing portion 1220, a distance between the guide frames 1310 and 1320 fixed to lower portions of the fixing portions 1221 and 1222 may also be variously varied.

Accordingly, finally, a pair of gripping portions 1350 and 1360 described below may move along the second direction Y, and a distance therebetween may be controlled to grip an assembly target object 21.

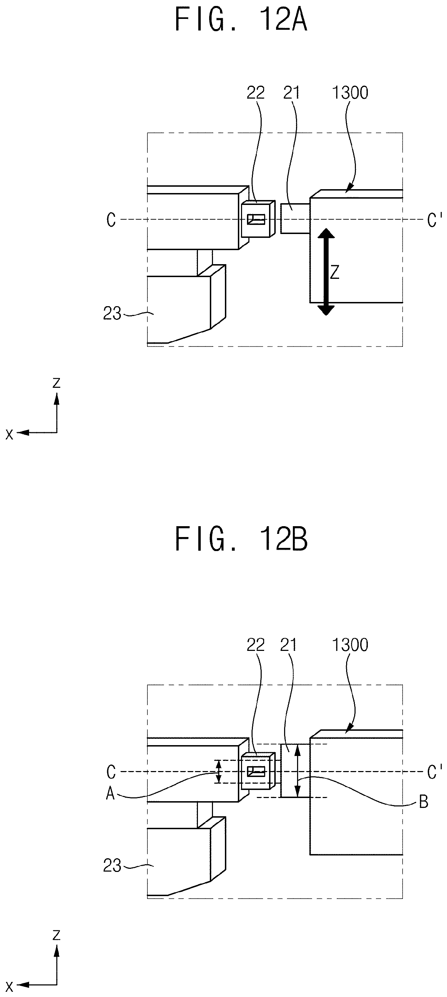

That is, the gripping unit 1300 is fixed to a lower portion of the fixing unit 1200, and grips the assembly target object 21 through the gripping unit 1300. In this case, since the gripping unit 1300 is positioned below the fixing unit 1200, the gripping unit 1300 is overall positioned at a front end side of the frame unit 1100. In this case, the front end side of the frame unit 1100 refers to a position close to a coupling portion 130 (see FIG. 12A) along the first direction X in the drawings.

More specifically, the gripping unit 1300 includes a pair of first and second guide frames 1310 and 1320, a pair of first and second slides 1330 and 1340, and a pair of first and second gripping portions 1350 and 1360.

That is, the gripping unit 1300 has an overall symmetric structure, and each component is formed as a pair. Through this configuration, the gripping unit 1300 grips an assembly target object 21 positioned at a center thereof.

The first and second guide frames 1310 and 1320 are fixed to the fixing portions 1221 and 1222, respectively, and extend downward along the third direction Z. In this case, the first guide frame 1310 includes a first horizontal guide frame 1311 fixed to the fixing portion 1221 and extending horizontally along the second direction Y, a first vertical guide frame 1312 extending vertically along the third direction Z from the first horizontal guide frame 1311, and a first guide rail 1313 formed on an inner surface of the first vertical guide frame 1312.

That is, the first guide frame 1310 is integrally formed to have an overall L-shape, and the first guide rail 1313 is formed along an inner surface thereof.

Similarly, the second guide frame 1320 has a symmetric shape with respect to the first guide frame 1310, and includes a second horizontal guide frame 1321 fixed to the fixing portion 1222 and extending horizontally along the second direction Y, a second vertical guide frame 1322 extending vertically along the third direction Z from the second horizontal guide frame 1321, and a second guide rail 1323 formed on an inner surface of the second vertical guide frame 1322.

Accordingly, the first and second guide rails 1313 and 1323 face each other and extend by a predetermined length along the third direction Z.

The first and second slides 1330 and 1340 slide along the first and second guide rails 1313 and 1323, respectively. The first and second slides 1330 and 1340 are coupled to outer sides of the first and second guide rails 1313 and 1323, and move upward and downward along the third direction Z, which is an extending direction of the first and second guide rails 1313 and 1323.

In this case, although not illustrated, movement of the first and second slides 1330 and 1340 along the third direction Z may be controlled through a separate driving control unit.

Further, as will be described below, when vibration is applied by the vibration generating unit 1400, the first and second slides 1330 and 1340 vibrate along the third direction Z on the first and second guide rails 1313 and 1323.

The first and second gripping portions 1350 and 1360 are mounted to the first and second slides 1330 and 1340, respectively, and grip the assembly target object 21.

That is, the first and second gripping portions 1350 and 1360 face each other in a state in which they are separated by a predetermined distance along the second direction Y, and have symmetric shapes. Accordingly, the assembly target object 21 may be gripped between the first and second gripping portions 1350 and 1360. In addition, when vibration is applied by the vibration generating unit 1400, the first and second gripping portions 1350 and 1360 also vibrate along the third direction Z together with the first and second slides 1330 and 1340.

As described above, since positions of the fixing portions 1221 and 1222 are varied by sliding along the second direction Y on the horizontal fixing portion 1220, a distance between the first and second gripping portions 1350 and 1360 is controlled, and through this configuration, gripping of the assembly target object 21 may be performed.

Each of the first and second gripping portions 1350 and 1360 includes first and second tip portions 1351 and 1361 at first ends thereof, and may grip the assembly target object 21 by fixing both sides of the assembly target object 21 through the first and second tip portions 1351 and 1361.

In addition, in a state in which the assembly target object 21 is gripped between the first and second gripping portions 1350 and 1360, since positions of the first and second gripping portions 1350 and 1360 are variable along the third direction Z, a position of the assembly target object 21 along the third direction Z may also be controlled. Further, in addition to positional control along the third direction Z, reciprocating movement along the third direction Z, that is, vibration, is performed by vibration described below.

The vibration generating unit 1400 generates vibration, and the assembly target object 21 is excited by vibration generated by the vibration generating unit 1400.

Specifically, the vibration generating unit 1400 includes an excitation portion 1410 and an excitation shaft 1420.

The excitation portion 1410 may be an exciter that generates vibration. In this case, the exciter may be, for example, an electromagnetic-force-based exciter that generates vibration using electromagnetic force. When an external force is applied, vibration may be offset by the electromagnetic force, and only residual vibration after offsetting may be induced. That is, when displacement of previously generated vibration is offset by an external force, vibration displacement may be reduced. Accordingly, vibration displacement in a state without an external force is reduced by the external force, and the external force is naturally absorbed, thereby minimizing transmission of the external force to the entire gripper 20. Through this configuration, damage or breakage of the excitation portion 1410 as well as the gripper 20 may be minimized.

That is, when the assembly target object 21 described below performs vibration with a predetermined displacement along the third direction Z and is coupled to a coupling portion 22, displacement along the third direction Z is reduced. In this process, a large impact may occur. However, when the excitation portion 1410 is an electromagnetic-force-based exciter, only a displacement corresponding to a force offset by the electromagnetic force is generated when an external force is applied, thereby preventing damage or breakage caused by the external force or impact as described above.

As illustrated, the excitation portion 1410 extends by a predetermined length along the third direction Z and is accommodated in the receiving space 1101 formed by the frame unit 1100.

Further, as described above, in consideration of an extending length of the excitation portion 1410, an extending length of the fixing unit 1200 and ultimately positions of the tip portions 1351 and 1361 of the first and second gripping portions 1350 and 1360 may be designed.

In addition, although the drawings illustrate that the excitation portion 1410 has a cylindrical shape, the excitation portion 1410 is not limited thereto.

Vibration generated by the excitation portion 1410 is transmitted to the excitation shaft 1420. That is, the excitation shaft 1420 passes through a center of the excitation portion 1410 and extends along the third direction Z, and extends to protrude downward from the excitation portion 1410.

In addition, a first end of the excitation shaft 1420 is fixed to the transmission unit 1500 described below. Accordingly, vibration generated by the excitation portion 1410 induces a reciprocating displacement change of the excitation shaft 1420 along the third direction Z, and accordingly, the transmission unit 1500 fixed to the excitation shaft 1420 also undergoes a reciprocating displacement change along the third direction Z. That is, the transmission unit 1500 vibrates along the third direction Z.

As described above, the transmission unit 1500 transmits a vibration state of the excitation shaft 1420 to the gripping unit 1300. Specifically, the transmission unit 1500 includes an inclined frame 1510, a central frame 1520, first and second holders 1530 and 1540, and a coupling frame 1550.

First, the coupling frame 1550 is connected to the excitation shaft 1420, and as illustrated, may be connected in a form in which the excitation shaft 1420 is fixed thereto.

The inclined frame 1510 is a frame structure having a first end connected to the coupling frame 1550 and a second end connected to the central frame 1520, and includes a pair of first and second inclined portions 1511 and 1512 extending in a symmetric structure.

In this case, the central frame 1520 is a frame structure extending along the second direction Y and having a width or length greater than a width of the coupling frame 1550. Accordingly, the first and second inclined portions 1511 and 1512 extend from the coupling frame 1550 toward the central frame 1520 while being inclined outward.

Accordingly, as illustrated, the transmission unit 1500 has an overall triangular shape, particularly an isosceles triangular shape, and a predetermined internal space 1501 is formed therein.

The central frame 1520 contacts rear surfaces of the pair of first and second gripping portions 1350 and 1360, and is connected to the first and second gripping portions 1350 and 1360 through the first and second holders 1530 and 1540.

That is, first and second opening grooves 1521 and 1522 are formed in the central frame 1520 at positions contacting rear surfaces of the first and second gripping portions 1350 and 1360, and the first and second holders 1530 and 1540 are positioned in the first and second opening grooves 1521 and 1522, respectively.

The first holder 1530 is positioned in the first opening groove 1521, and a first fixing bar 1531 extending from the first holder 1530 passes through and fixes the first gripping portion 1350. Through this configuration, the first holder 1530 and the first gripping portion 1350 are fixed to each other, and accordingly, a first side of the central frame 1520 is fixed to the first gripping portion 1350.

Similarly, the second holder 1540 is positioned in the second opening groove 1522, and a second fixing bar 1541 extending from the second holder 1540 passes through and fixes the second gripping portion 1360. Through this configuration, the second holder 1540 and the second gripping portion 1360 are fixed to each other, and accordingly, a second side of the central frame 1520 is fixed to the second gripping portion 1360.

Accordingly, both sides of the central frame 1520 are fixed to rear surfaces of the first and second gripping portions 1350 and 1360, respectively.

In this case, as illustrated, the first opening groove 1521 may be formed to have a width along the second direction Y greater than a size of the first holder 1530.

Similarly, as illustrated, the second opening groove 1522 may be formed to have a width along the second direction Y greater than a size of the second holder 1540.

In this case, the first and second opening grooves 1521 and 1522 are formed to have sizes identical to sizes of the first and second holders 1530 and 1540 along the third direction Z. Through this configuration, when the first and second holders 1530 and 1540 vibrate along the third direction Z, the first and second gripping portions 1350 and 1360 may vibrate with the same vibration amplitude.

As described above, since sizes of the first and second opening grooves 1521 and 1522 along the second direction Y are greater than sizes of the first and second holders 1530 and 1540, positions of the first and second holders 1530 and 1540 may be variable along the second direction Y within the first and second opening grooves 1521 and 1522.

That is, positions of the first and second holders 1530 and 1540 along the second direction Y within the first and second opening grooves 1521 and 1522 may be varied. Through this configuration, the first and second gripping portions 1350 and 1360 may be relatively moved along the second direction Y in order to grip assembly target objects 21 having various widths.

FIG. 12A and FIG. 12B are schematic views illustrating a state in which a connector is coupled to a coupling portion using the gripper of FIG. 9.

FIG. 12A and FIG. 12B are schematic diagrams for explaining that alignment may be omitted when an assembly target object is assembled to a coupling portion by vibration, and schematically illustrate the gripper of FIG. 9.

As illustrated in FIG. 12A, in a state in which an assembly target object 21 is gripped by the gripping unit 1300, in order to assemble the assembly target object 21 to a coupling portion 22, the assembly target object 21 and the coupling portion 22 are to be aligned such that respective centerlines C-C' coincide with each other.

That is, in a state in which the coupling portion 22 is fixed to a jig 23, the assembly target object 21 is to be moved along the third direction Z so that the assembly target object 21 is positioned along the same centerline as a centerline of the coupling portion 22.

Of course, FIG. 12A illustrates only an alignment state along the third direction Z, and in practice, alignment along the second direction Y is also required. Accordingly, after alignment along the third direction Z is performed as illustrated in FIG. 12A, the assembly target object 21 is also moved along the second direction Y to perform alignment along the second direction Y, and then the assembly target object 21 is moved toward the coupling portion 22 along the first direction X. Thereafter, the assembly target object 21 and the coupling portion 22 are assembled with each other.

In particular, when the assembly target object 21 is a connector and the coupling portion 22 is a connector holder, alignment along the third direction Z as well as alignment along the second direction Y is to be performed more precisely.

However, referring to FIG. 12B, when the gripping unit 1300 vibrates along the third direction Z and the assembly target object 21 also vibrates along the third direction Z, assembly may be possible even if a centerline of the assembly target object 21 and a centerline of the coupling portion 22 do not exactly coincide with C-C'.

That is, when the assembly target object 21 vibrates within a range C that is larger than a target region A to be fastened in the coupling portion 22, even if the assembly target object 21 and the coupling portion 22 are not aligned along the third direction Z, alignment along the third direction Z may be naturally performed by the vibration.

In this case, when the vibration range C of the assembly target object 21 is within approximately twice the target region A, alignment as described above may be omitted.

Accordingly, if only alignment along the second direction Y between the assembly target object 21 and the coupling portion 22 is performed while the gripping unit 1300 is transferred along the second direction Y, the assembly target object 21 may be fastened to the coupling portion 22 while omitting alignment along the third direction Z by transferring the assembly target object 21 along the first direction X while vibrating the assembly target object 21 along the third direction Z.

Ultimately, in the present example embodiment, by vibrating the assembly target object 21 along the third direction Z, the assembly target object 21 may be fastened to the coupling portion 22 while omitting alignment along the third direction Z.

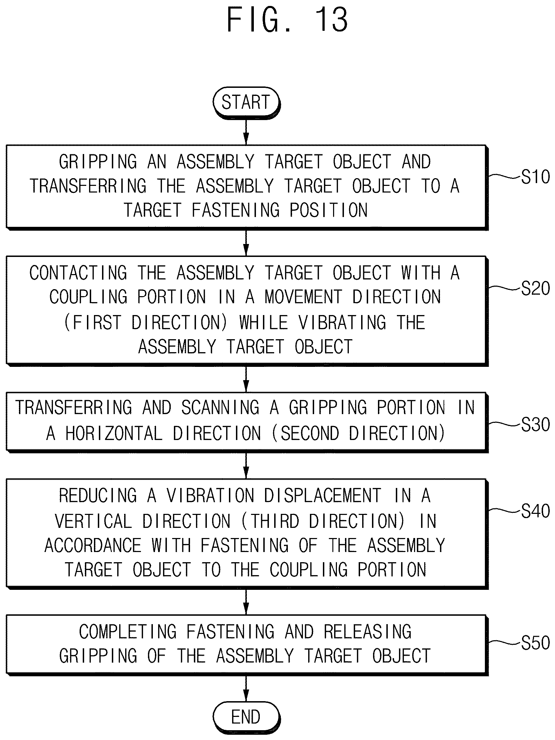

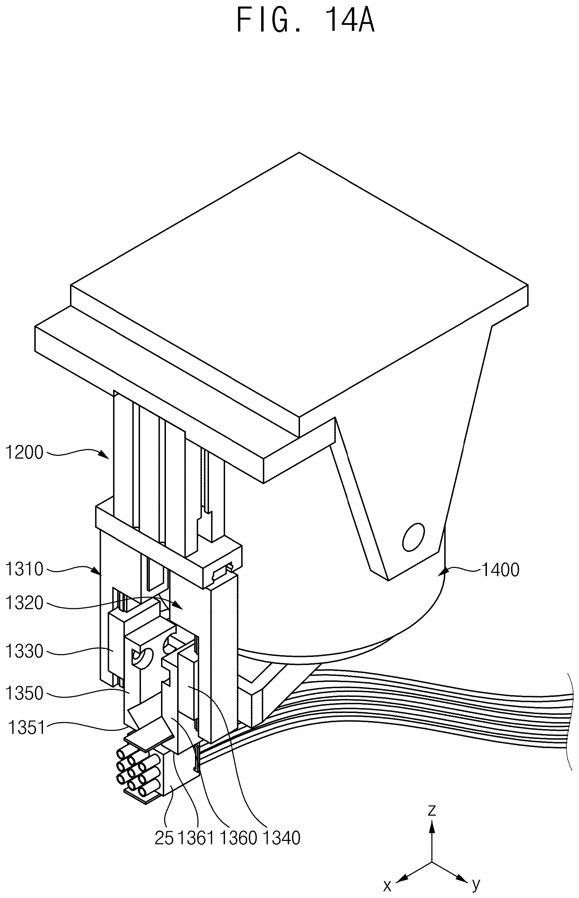

FIG. 13 is a flowchart illustrating an assembly method using the gripper of FIG. 9. FIG. 14A to FIG. 14D are schematic views for explaining the assembly method of FIG. 13.

First, referring to FIG. 13 and FIG. 14A, in an assembly method using the gripper 20, an assembly target object 25 is first gripped as illustrated in FIG. 14A, and the gripped assembly target object 25 is transferred to a target fastening position (step S10). In this case, the target fastening position may be a position adjacent to a coupling portion 26 to which the assembly target object 25 is fastened, and alignment with the coupling portion 26 does not need to be performed.

However, the assembly target object 25 is to be positioned within a range in which automatic alignment may be performed by vibration, and such an alignable range is the same as described above with reference to FIG. 12B.

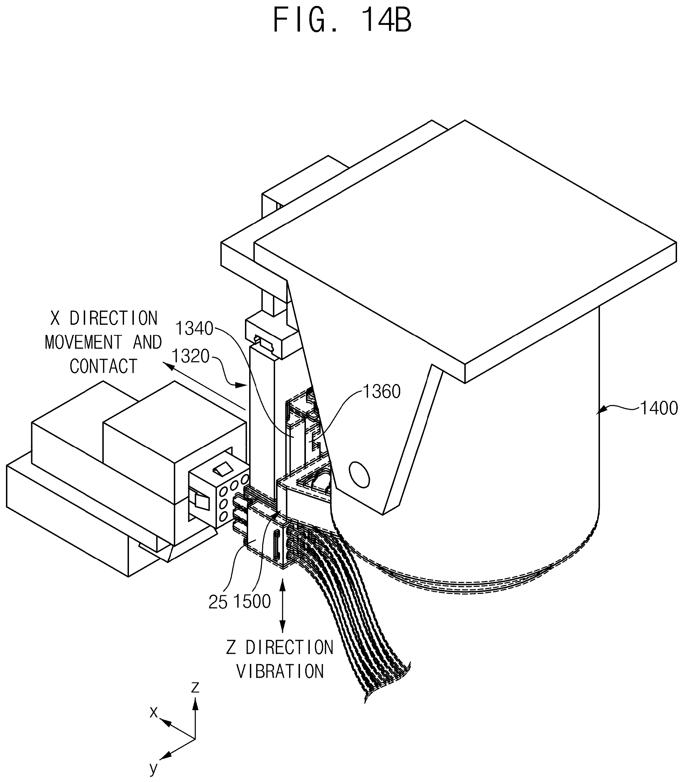

Thereafter, referring to FIG. 13 and FIG. 14B, while vibrating the assembly target object 25, the assembly target object 25 is transferred in a target fastening direction (transfer direction) and brought into contact with the coupling portion 26 (step S20). In this case, the target fastening direction may be the first direction X, and it is sufficient that the assembly target object 25 and the coupling portion 26 are in physical contact with each other, and separate alignment may be omitted.

Meanwhile, vibration of the assembly target object 25 is performed through the driving unit 1400 described above.

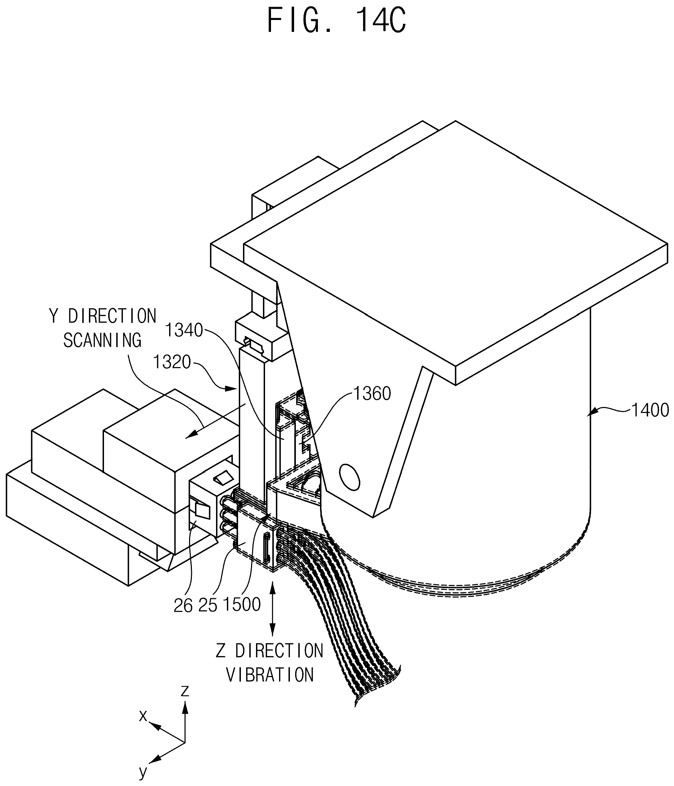

Thereafter, referring to FIG. 13 and FIG. 14C, the first and second gripping portions 1350 and 1360 are transferred along the second direction Y (horizontal direction), and a position of the coupling portion 26 along the second direction Y is scanned (step S30). That is, through scanning along the second direction Y, alignment between the coupling portion 26 and the assembly target object 25 along the second direction Y may be performed.

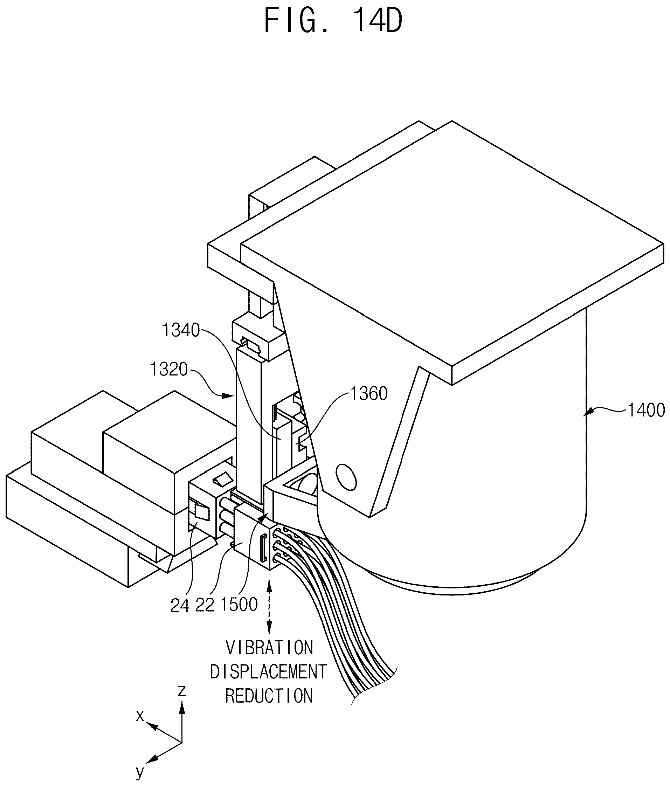

Thereafter, referring to FIG. 13 and FIG. 14D, when the assembly target object 25 is aligned with the coupling portion 26 only along the second direction Y, alignment along the third direction Z is naturally performed by vibration, and thus the assembly target object 25 is fastened to the coupling portion 26. In particular, when the assembly target object 25 is fastened to the coupling portion 26 as described above, an external force generated by fastening is transmitted to the vibration portion 1410, and accordingly, a vibration displacement of the vibration portion 1410 is reduced by the external force. That is, a vibration displacement of the vibration portion 1410 along the third direction Z is reduced by the external force, and in this case, the vibration portion 1410 naturally reduces an amplitude (displacement) of vibration in response thereto (step S40).

Accordingly, fastening between the assembly target object 25 and the coupling portion 26 is completed, and gripping of the assembly target object 25 is released (step S50).

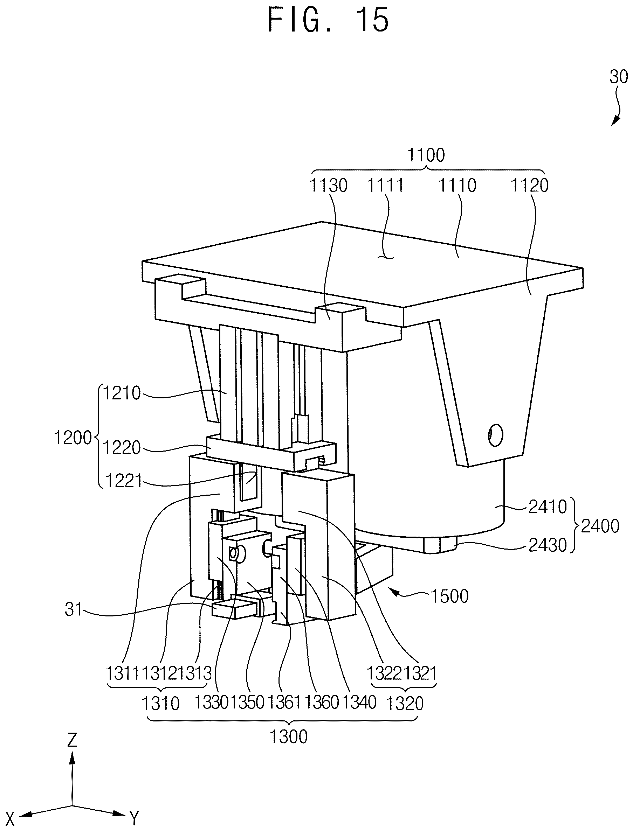

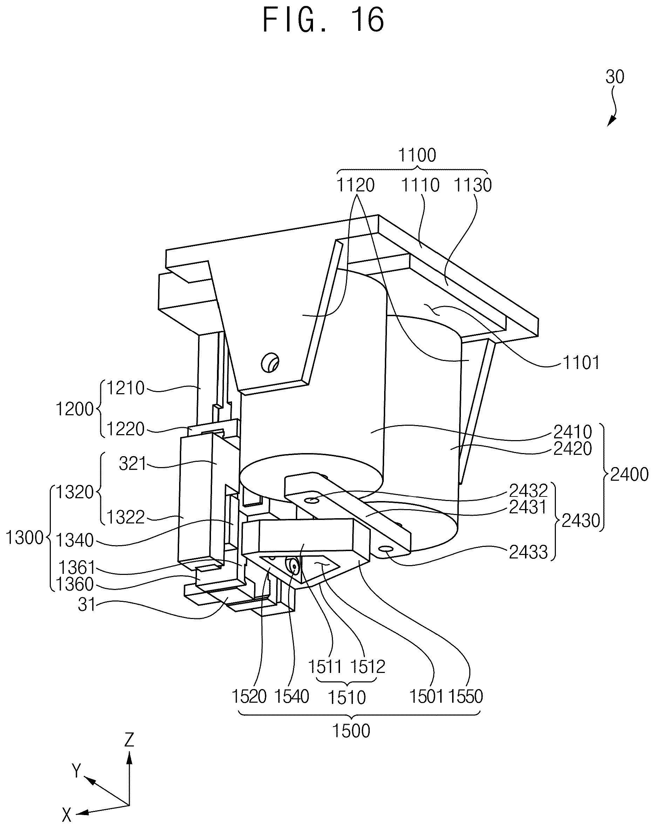

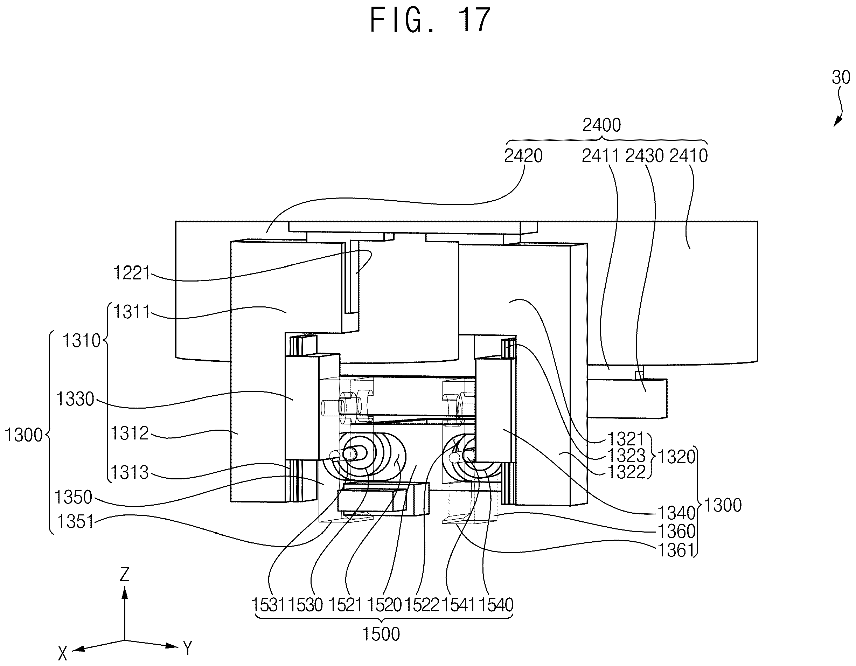

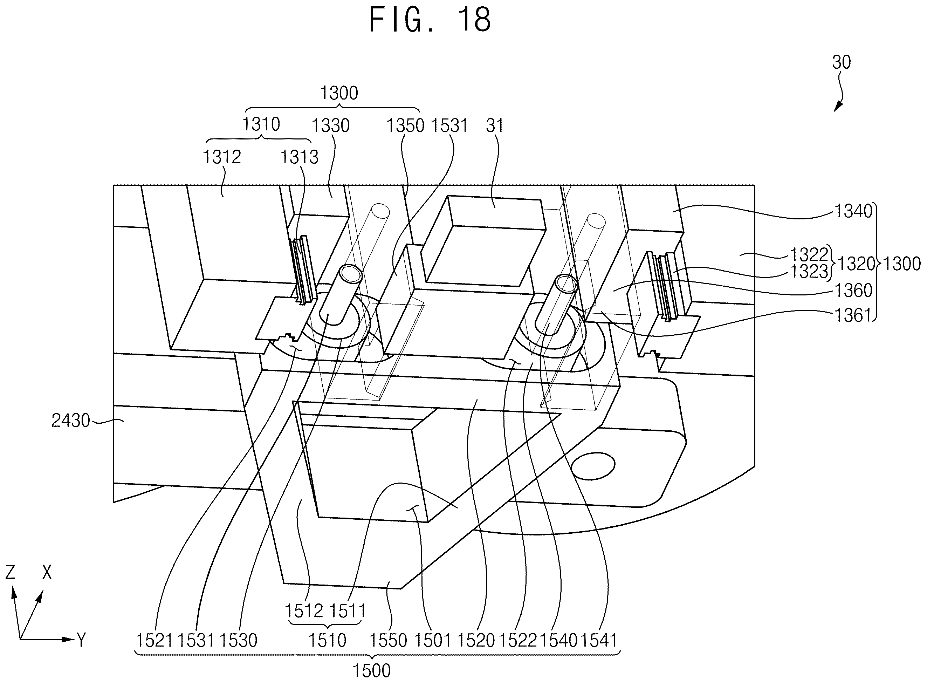

FIG. 15 is a front perspective view illustrating a vibration-based gripper according to still another example embodiment of the present invention. FIG. 16 is a rear perspective view illustrating the gripper of FIG. 15. FIG. 17 and FIG. 18 are perspective views illustrating a transmission unit and a gripping unit of the gripper of FIG. 15 in detail.

The gripper 30 according to the present example embodiment is substantially the same as the gripper 20 described above with reference to FIG. 9, except that a pair of vibration generating units 2400 is provided and the transfer unit 1500 is rotatable accordingly. Thus, identical reference numerals are used for identical components, and redundant descriptions are omitted.

Referring to FIG. 15 through FIG. 18, in the gripper 30 according to the present example embodiment, the vibration generating unit 2400 includes a pair of vibration portions 2410 and 2420 as illustrated, and the transfer unit 1500 transfers vibrations transmitted through the pair of vibration portions 2410 and 2420.

Specifically, the vibration generating unit 2400 includes first and second vibration portions 2410 and 2420 and a connection portion 2430, and an assembly target object 31 is vibrated by vibrations generated from the vibration generating unit 2400.

Each of the first and second vibration portions 2410 and 2420 may be a vibration element configured to independently generate vibration. In this case, each vibration element may be, for example, an electromagnetic vibration exciter, which generates vibration using electromagnetic force, and when an external force is applied, vibration is canceled by the external force and only residual vibration after cancellation may be induced. That is, when displacement of previously generated vibration is canceled by the external force, vibration displacement may be reduced.

As illustrated, the first and second vibration portions 2410 and 2420 extend in parallel to each other by a predetermined length along the third direction Z and are accommodated in the accommodation space 1101 formed by the frame unit 1100.

Further, as described above, in consideration of extension lengths of the first and second vibration portions 2410 and 2420, an extension length of the fixing unit 1200 and positions of tip portions 1351 and 1361 of the first and second gripping portions 1350 and 1360 may be designed.

Although the first and second vibration portions 2410 and 2420 are illustrated as having cylindrical shapes, the shapes are not limited thereto.

Vibrations generated by the first and second vibration portions 2410 and 2420 are transmitted to first and second vibration shafts 2411 and 2421, respectively, which extend downward by penetrating central portions of the first and second vibration portions 2410 and 2420.

In this case, first ends of the first and second vibration shafts 2411 and 2421 are fixed to the connection portion 2430.

That is, the connection portion 2430 includes a connection frame 2431 extending by a predetermined length along the second direction Y, and first and second joints 2432 and 2433 respectively provided at a first end and a second end of the connection frame 2431.

The connection frame 2431 is a bar-shaped frame structure extending by a predetermined length, wherein a first end of the first vibration shaft 2411 is connected to the first joint 2432, and a first end of the second vibration shaft 2421 is connected to the second joint 2433.

Accordingly, vibration generated by the first vibration portion 2410 is transmitted to a first end of the connection portion 2430 through the first vibration shaft 2411, and vibration generated by the second vibration portion 2420 is transmitted to a second end of the connection portion 2430 through the second vibration shaft 2421.

In the present example embodiment, the first and second vibration portions 2410 and 2420 may generate vibrations having the same phase, but may alternatively generate vibrations having different phases.

When the first and second vibration portions 2410 and 2420 generate vibrations having the same phase, both the first end and the second end of the connection portion 2430 vibrate with the same phase, and thus the connection portion 2430 vibrates along the third direction Z while maintaining a horizontal state.

In contrast, when the first and second vibration portions 2410 and 2420 generate vibrations having different phases, the first end and the second end of the connection portion 2430 vibrate with different phases. Further, when both ends of the connection portion 2430 vibrate with different phases, the connection portion 2430 does not maintain a horizontal state, and the first and second ends vibrate upward and downward differently about a central portion depending on a phase difference.

That is, in one vibration state, the first joint 2432 of the connection portion 2430 may be positioned lower than the second joint 2433, and in another vibration state, the first joint 2432 may be positioned higher than the second joint 2433. As such, the connection portion 2430 vibrates while having various postures including an inclined state rather than maintaining a horizontal state.

In order for the connection portion 2430 to vibrate while having various postures other than a horizontal state as described above, the first and second joints 2432 and 2433 are configured as rotatable flexible joints. Accordingly, connections between the first and second joints 2432 and 2433 and the first and second vibration shafts 2411 and 2421 may be stably maintained.

The transfer unit 1500 transfers vibration states of the connection portion 2430 to the gripping unit 1300, and transfers both a vibration state in which the connection portion 2430 vibrates while maintaining a horizontal state and a vibration state in which the connection portion 2430 vibrates while being inclined.

Specifically, the transfer unit 1500 includes an inclined frame 1510, a central frame 1520, first and second holders 1530 and 1540, and a coupling frame 1550.

First, the coupling frame 1550 is connected to a central portion of the connection portion 2430 and may be connected to a lower surface of the connection portion 2430 as illustrated. In this case, the coupling frame 1550 reflects a posture of the connection portion 2430 and varies its posture accordingly, and may be fixed to the central portion of the connection portion 2430.

The inclined frame 1510 is a frame structure in which a first end is connected to the coupling frame 1550 and a second end is connected to the central frame 1520, and includes a pair of first and second inclined portions 1511 and 1512 extending in a symmetrical structure.

The central frame 1520 extends along the second direction Y with a width or length greater than a width of the coupling frame 1550. Accordingly, the first and second inclined portions 1511 and 1512 extend outwardly in an inclined manner from the coupling frame 1550 toward the central frame 1520.

As a result, the transfer unit 1500 has an isosceles triangular shape as illustrated, and a predetermined internal space 1501 is formed therein.

The central frame 1520 contacts rear surfaces of the first and second gripping portions 1350 and 1360 and is connected to the first and second gripping portions 1350 and 1360 through the first and second holders 1530 and 1540.

That is, first and second openings 1521 and 1522 are formed in the central frame 1520 at positions contacting rear surfaces of the first and second gripping portions 1350 and 1360, and the first and second holders 1530 and 1540 are fastened to the first and second openings 1521 and 1522.

The first holder 1530 is positioned through the first opening 1521, and a first fixing bar 1531 extending from the first holder 1530 penetrates and fixes the first gripping portion 1350. Accordingly, the first holder 1530 and the first gripping portion 1350 are fixed to each other, and thus a first side of the central frame 1520 is fixed to the first gripping portion 1350.

Similarly, the second holder 1540 is positioned through the second opening 1522, and a second fixing bar 1541 extending from the second holder 1540 penetrates and fixes the second gripping portion 1360. Accordingly, the second holder 1540 and the second gripping portion 1360 are fixed to each other, and thus a second side of the central frame 1520 is fixed to the second gripping portion 1360.

As a result, both sides of the central frame 1520 are fixed to rear surfaces of the first and second gripping portions 1350 and 1360, respectively.

In this case, as illustrated, the first opening 1521 may be formed to be larger than the first holder 1530, and a width of the first opening 1521 along the second direction Y may be larger than a size of the first holder 1530.

Similarly, the second opening 1522 may be formed to be larger than the second holder 1540, and a width of the second opening 1522 along the second direction Y may be larger than a size of the second holder 1540.

Since sizes of the first and second openings 1521 and 1522 are larger than sizes of the first and second holders 1530 and 1540 as described above, positions of the first and second holders 1530 and 1540 may be variable within the first and second openings 1521 and 1522.

Accordingly, even when the first and second holders 1530 and 1540 are positioned at different locations along the third direction Z as described later, the first and second holders 1530 and 1540 may vary their positions within the first and second openings 1521 and 1522, and thus the first and second gripping portions 1350 and 1360 may be positioned differently along the third direction Z.

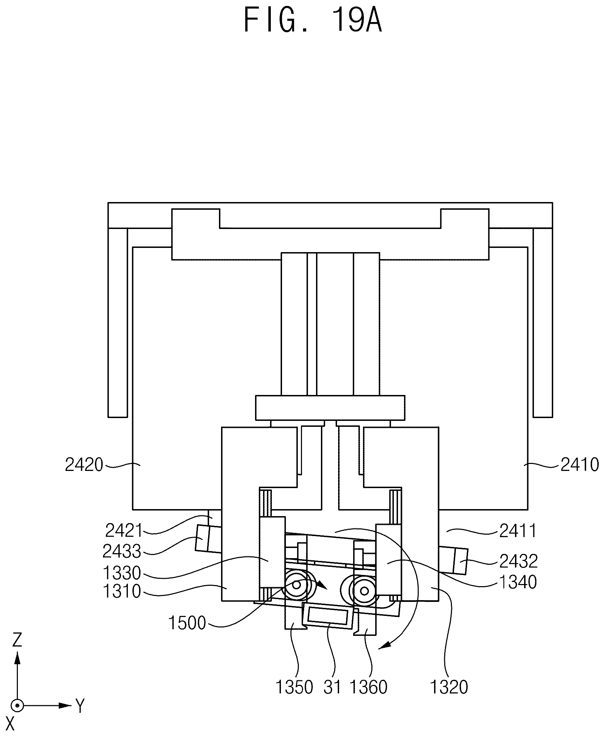

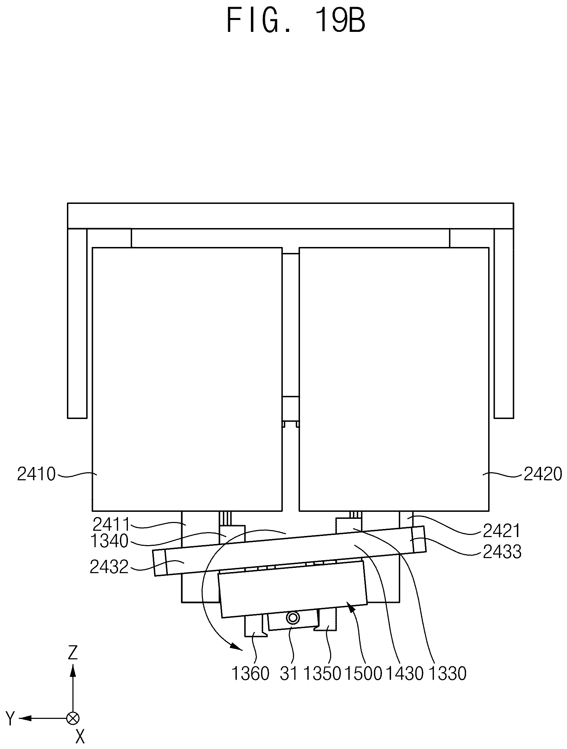

FIG. 19A and FIG. 19B are a front view and a rear view illustrating a state in which the gripper of FIG. 15 is rotated.

When the assembly target object 31 and the coupling portion (here, the coupling portion refers to a component to which the assembly target object 31 is fastened) are, for example, a connector and a connector holder, the coupling portion may not necessarily be fixed to the jig 240 in a direction parallel to the XY plane.

That is, the coupling portion may be fixed to the jig 240 in a state rotated by a predetermined angle about the first direction X as a rotation axis. In this case, by vibrating the assembly target object 31 along the third direction Z with respect to the coupling portion, it may be difficult to naturally induce alignment along the third direction Z.

Accordingly, in the present example embodiment, even when a posture error in a so-called roll direction exists, natural alignment may be achieved without performing separate alignment within a predetermined range, and the assembly target object 31 may be fastened to the coupling portion.

That is, referring to FIG. 19A and FIG. 19B, as described above, the first and second vibration portions 2410 and 2420 independently perform vibration, and thus may vibrate with the same phase or may vibrate with different phases.

When the first and second vibration portions 2410 and 2420 vibrate with the same phase, the assembly target object 31 maintains a horizontal state and vibrates along the third direction Z with a uniform phase.

However, when the first and second vibration portions 2410 and 2420 vibrate with different phases, the assembly target object 31 does not maintain a horizontal state and vibrates while being rotated as illustrated in FIG. 19A and FIG. 19B.

For example, an arbitrary moment during vibration in which the first and second vibration portions 2410 and 2420 vibrate with different phases will be described as follows. That is, a case in which the first vibration portion 2410 is positioned at a maximum displacement during vibration and the second vibration portion 2420 is positioned at a minimum displacement during vibration will be described as an example to explain a position of the assembly target object 31.

At such an arbitrary moment during vibration, the connection portion 2430 may be positioned such that a first joint 2432 side is located lower than a second joint 2433 side as illustrated, and accordingly, the transfer unit 1500 is also positioned in an inclined direction.

Further, as the transfer unit 1500 is positioned in the inclined direction, the first holder 1530 is positioned at a relatively lower position than the second holder 1540, and ultimately, the second gripping portion 1360 is positioned at a lower position than the first gripping portion 1350. That is, the assembly target object 31 rotates clockwise about the first direction X as a rotation axis.

In contrast, when the first vibration portion 2410 is positioned at a minimum displacement during vibration and the second vibration portion 2420 is positioned at a maximum displacement during vibration, the assembly target object 31 rotates counterclockwise about the first direction X as a rotation axis.

As a result, by controlling phases of vibrations generated by the first and second vibration portions 2410 and 2420 to be different from each other, the assembly target object 31 may repeatedly rotate clockwise or counterclockwise about the first direction X as a rotation axis within a predetermined range.

Accordingly, similarly to omitting alignment along the third direction Z when vibration is applied along the third direction Z, alignment in the so-called roll direction may also be omitted when the assembly target object 31 rotates about the first direction X as a rotation axis.

In this case, since the first and second vibration portions 2410 and 2420 overall perform vibration along the third direction Z, when assembling the assembly target object 31 to the coupling portion, both alignment along the third direction Z and alignment in the roll direction may be omitted, and natural alignment may be achieved.

However, in this case, alignment along the second direction Y should be performed while transferring the assembly target object 31 along the second direction Y.

Ultimately, when vibrations having different phases are applied from the first and second vibration portions 2410 and 2420, if only alignment along the second direction Y between the assembly target object 31 and the coupling portion is performed through scanning along the second direction Y, alignment along the third direction Z as well as alignment in the roll direction may be naturally performed during the vibration process.

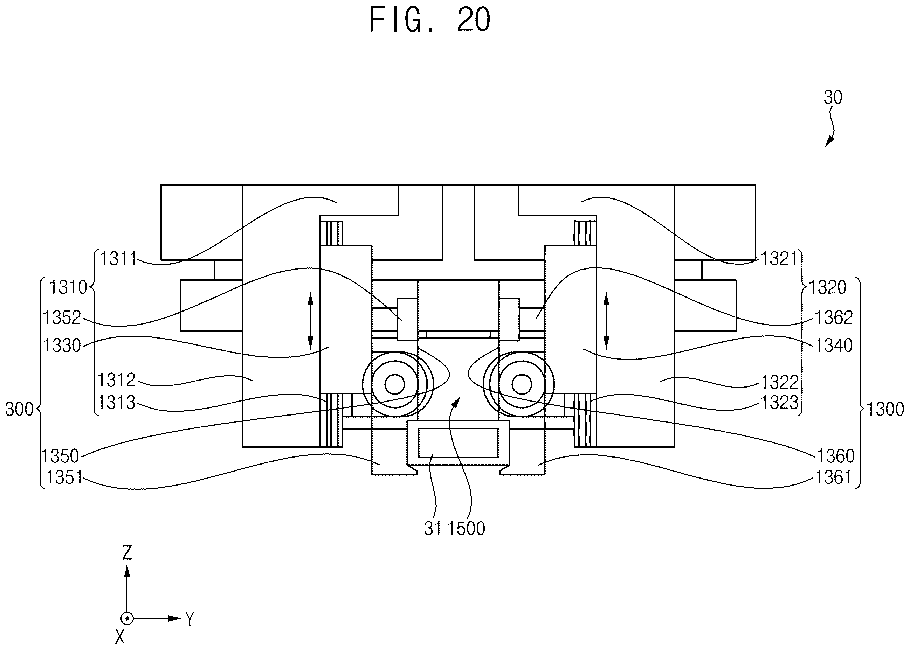

FIG. 20 is an enlarged front view illustrating a state in which the gripper of FIG. 15 moves in a vertical direction.

Referring to FIG. 20, in addition to alignment by vibration described above with reference to FIG. 19B, a position of the gripping unit 1300 is variably controlled along the third direction Z.

That is, the first and second slides 1330 and 1340 may be driven by a separate drive controller, and may be moved along the third direction Z on the first and second guide rails 1313 and 1323.

Accordingly, positions of the first and second gripping portions 1350 and 1360 are also variably adjusted along the third direction Z, and thus a position of the assembly target object 31 may be varied along the third direction Z.

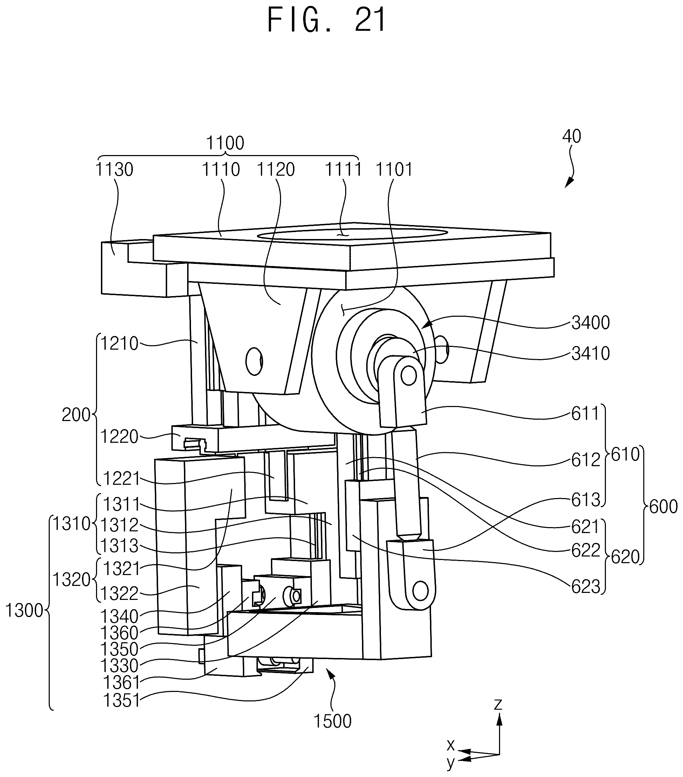

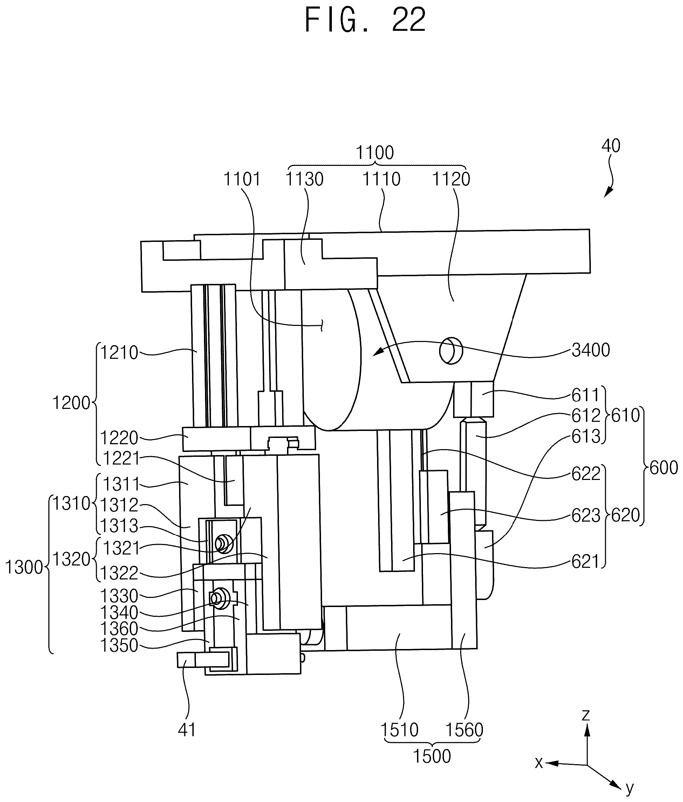

FIG. 21 is a rear perspective view illustrating a gripper according to still another example embodiment of the present invention. FIG. 22 is a front perspective view illustrating the gripper of FIG. 21.

The gripper 40 according to the present example embodiment is substantially the same as the gripper 20 described above with reference to FIG. 9, except that the gripper 40 further includes a driving unit 3400 and a suspension unit 600. Accordingly, the same reference numerals are used for the same components, and redundant descriptions are omitted.

Referring to FIG. 21 and FIG. 22, in the gripper 40 according to the present example embodiment, the driving unit 3400 generates a driving force, and the suspension unit 600 converts the driving force into vibration and transmits the vibration to the transfer unit 1500.

The driving unit 3400 is disposed in the accommodation space 1101 and generates a rotational driving force. The accommodation space 1101 is a space formed by the horizontal frame 1110 and the side frame 1120, and the driving unit 3400 is accommodated below the horizontal frame 1110. The driving unit 3400 may be a driving motor that generates a rotational driving force. In this case, the driving unit 3400 includes a crank portion 3410 connected to an end of a rotational driving shaft (not shown). The crank portion 3410 is connected to the suspension unit 600 described below, and accordingly, a rotational driving motion generated by the driving unit 3400 is converted into a reciprocating linear motion.

The suspension unit 600 is connected between the driving unit 3400 and the transfer unit 1500 described below, and converts the rotational driving motion generated by the driving unit 3400 to induce a reciprocating linear motion, that is, vibration of the transfer unit 1500.

Specifically, the suspension unit 600 includes an adaptive suspension portion 610 and a drive guide portion 620.

The adaptive suspension portion 610 converts the rotational driving force generated by the driving unit 3400 into a linear motion, and at the same time appropriately absorbs an external force applied from outside.

That is, the adaptive suspension portion 610 includes a first connection portion 611 connected to the crank portion 3410, a second connection portion 613 connected to a vertical frame 1560 of the transfer unit 1500, and an absorption portion 612 extending between the first and second connection portions 611 and 613.

The first connection portion 611 is connected to the crank portion 3410 and converts rotational driving of the driving unit 3400 into reciprocating linear motion through the crank portion 3410, and transmits the converted motion to the absorption portion 612. Accordingly, the absorption portion 612 performs reciprocating linear motion and transmits a driving force of the reciprocating linear motion to the second connection portion 613. Ultimately, the transfer unit 1500 also receives the reciprocating linear driving force through the second connection portion 613.

In this case, the adaptive suspension portion 610 extends overall along the third direction Z. Since the first connection portion 611 rotates and performs conversion of a driving direction from rotational motion to linear motion, the second connection portion 613 should also be connected to the vertical frame 1560 so as to be rotatable to a predetermined extent. Accordingly, damage or breakage between the second connection portion 613 and the vertical frame 1560 caused by an external force applied in a direction different from the third direction Z during conversion from rotational motion to linear motion may be minimized.

Meanwhile, the vertical frame 1560 connected to the second connection portion 613, that is, the transfer unit 1500, may partially perform rotational motion. Therefore, in order to minimize such rotational motion of the transfer unit 1500 and allow the transfer unit 1500 to perform only reciprocating linear motion, a driving direction of the transfer unit 1500 is guided or restricted by the drive guide portion 620.

That is, the drive guide portion 620 extends along the third direction Z and constrains a driving direction of the transfer unit 1500 to the third direction Z. Specifically, the drive guide portion 620 includes a drive guide frame 621, a drive guide rail 622, and a drive slide 623.

The drive guide frame 621 has a first end fixed to a lower portion of the driving unit 3400 and has a frame structure extending a predetermined length along the third direction Z.

The drive guide rail 622 is a sliding guide structure formed on the drive guide frame 621 and corresponds to a guide structure extending along the third direction Z.

The drive slide 623 slides on the drive guide rail 622, and a first end of the vertical frame 1560 is fixed to the drive slide 623.

Accordingly, the vertical frame 1560, that is, the transfer unit 1500, is driven such that an upper end thereof is fixed to the drive slide 623 and the drive slide 623 moves only along the drive guide rail 622, and thus a driving direction of the transfer unit 1500 is constrained to reciprocate only along the third direction Z.

As a result, a rotational driving force provided from the driving unit 3400 is converted into reciprocating linear motion and transmitted to the transfer unit 1500. The transfer unit 1500 is constrained in a transfer direction by the drive guide portion 620 and moves only along the third direction Z.

Accordingly, by the rotational driving force provided through the driving unit 3400, the transfer unit 1500 reciprocates along the third direction Z within a predetermined stroke. As a rotational speed of the driving unit 3400 increases, the transfer unit 1500 vibrates along the third direction Z at a higher speed.

Meanwhile, the transfer unit 1500 transmits a vibration state along the third direction Z to the gripping unit 1300.

In this case, a detailed structure of the transfer unit 1500 is the same as that already described in detail with reference to the gripper 20, except that the transfer unit 1500 further includes the vertical frame 1560 to which the suspension unit 600 is connected. Accordingly, redundant descriptions are omitted. Here, the transfer unit 1500 and the vertical frame 1560 may be formed as separate components fixed to each other or may be integrally formed as a single structure.

That is, as described above, the transfer unit 1500 has an overall triangular frame structure and is fixed to rear surfaces of the first and second gripping portions 1350 and 1360. Accordingly, reciprocating linear motion, that is, vibration of the transfer unit 1500 along the third direction Z is directly transmitted to the first and second gripping portions 1350 and 1360. As a result, the assembly target object 41 gripped by the first and second gripping portions 1350 and 1360 vibrates in the same manner.

Accordingly, the rotational driving force of the driving unit 3400 induces vibration of the assembly target object 41 along the third direction Z.

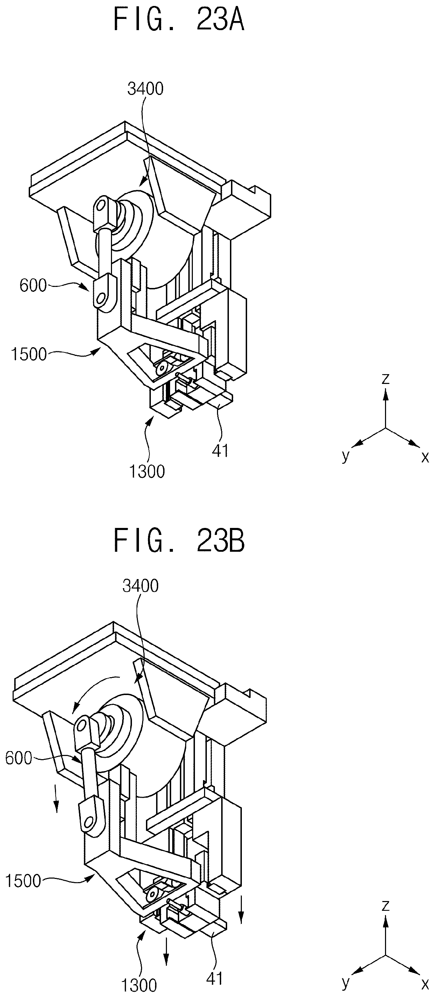

FIG. 23A to FIG. 23C are perspective views sequentially illustrating an operating state of the gripper of FIG. 21.

Referring to FIG. 23A, operation of the gripper 40 according to the present example embodiment starts in a state in which the gripping unit 1300 grips the assembly target object 41. Of course, as described above, when the gripping unit 1300 is omitted, the assembly target object 41 may be held on the transfer unit 1500, and operation of the gripper 40 may be started in the same manner.

That is, as illustrated in FIG. 23B, in the gripper 40, the driving unit 3400 starts rotational driving in a clockwise direction with respect to the first direction X as indicated by an arrow. Accordingly, rotational driving is converted into linear driving through the crank portion 3410, and the suspension unit 600 performs linear motion, that is, moves downward along the third direction Z.

At this time, as the suspension unit 600 performs linear driving, the transfer unit 1500 moves integrally in a linear manner in a downward direction along the third direction Z. In this case, since a movement direction of the transfer unit 1500 is guided by the drive guide portion 620, the transfer unit 1500 performs linear driving in the same direction as the third direction Z.

Further, as the transfer unit 1500 performs such linear driving, the gripping unit 1300 fixed to the transfer unit 1500 and the assembly target object 41 gripped by the gripping unit 1300 also move downward along the third direction Z in the same direction and with the same stroke as the transfer unit 1500.

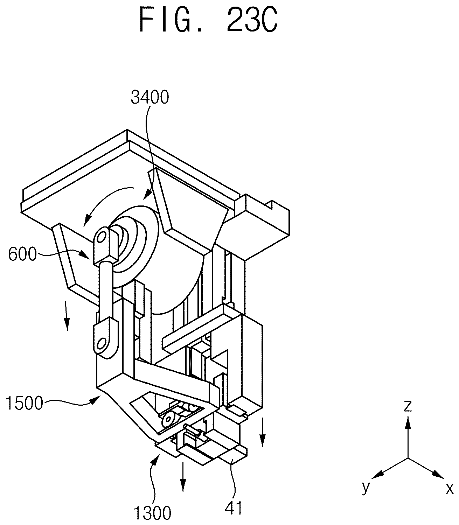

Further, referring to FIG. 23C, when the driving unit 3400 further rotates and the suspension unit 600 moves until reaching a maximum stroke in the downward direction along the third direction Z, the assembly target object 41 likewise moves in the same direction until reaching the maximum stroke.

Thereafter, although not illustrated, when the driving unit 3400 further rotates in the same direction, the suspension unit 600 changes its moving direction to an upward direction along the third direction Z and moves accordingly, and the assembly target object 41 also changes its moving direction to the upward direction along the third direction Z and performs linear driving.

As a result, as described above, by rotational driving of the driving unit 3400, the assembly target object 41 performs reciprocating linear driving along the third direction Z, which in turn induces vibration of the assembly target object 41 along the third direction Z.

Accordingly, the assembly target object 41 performs vibration within a predetermined stroke range by rotational driving of the driving unit 3400, and may be aligned with and fastened to a coupling portion.

Meanwhile, in the present example embodiment, the absorption portion 612 extends between the first and second connection portions 611 and 613 as described above, and absorbs an external force applied from outside. That is, while the driving unit 3400 performs rotational driving and the transfer unit 1500 performs linear driving, an external force generated during conversion of rotational driving into linear motion may be absorbed by the absorption portion 612.

Further, since the transfer unit 1500 is fixed to the gripping unit 1300 and the assembly target object 41 is gripped by the gripping unit 1300, an external force transmitted to the transfer unit 1500 may vary depending on a weight of the assembly target object 41. That is, an initial external force applied to the absorption portion 612 may vary depending on the weight of the assembly target object 41, and accordingly, an initial extension length of the absorption portion 612 may be varied depending on the weight of the assembly target object 41. Ultimately, the absorption portion 612 absorbs the weight of the assembly target object 41, and an initial extension length thereof may be varied.

In addition, when the assembly target object 41 is coupled to the coupling portion, as vibration of the assembly target object 41 continues and contact and fastening with the coupling portion start, a vibration range of the assembly target object 41 rapidly decreases and a large external force is applied to the assembly target object 41. Such an external force is also transmitted to the absorption portion 612. Accordingly, the absorption portion 612 absorbs an external force generated at a moment when contact or assembly starts, thereby minimizing transmission of the external force to the driving unit 3400 and preventing damage or breakage of the driving unit 3400.

Further, the absorption portion 612 should effectively absorb external forces that vary during a process until the assembly target object 41 is finally coupled to the coupling portion. In particular, until fastening is completed, the driving unit 3400 maintains and performs rotational driving at an initial rotational speed (rpm). Therefore, the absorption portion 612 should be capable of effectively absorbing external forces generated during the assembly process while a rotational state of the driving unit 3400 is maintained.

To this end, the absorption portion 612 may include an elastic member such as a spring or may include a damper capable of absorbing an external force. In this case, an elastic coefficient of the elastic member or a damping coefficient of the damper may be preset in consideration of an external force generated during a coupling process, a rotational speed of the driving unit 3400, and the like.

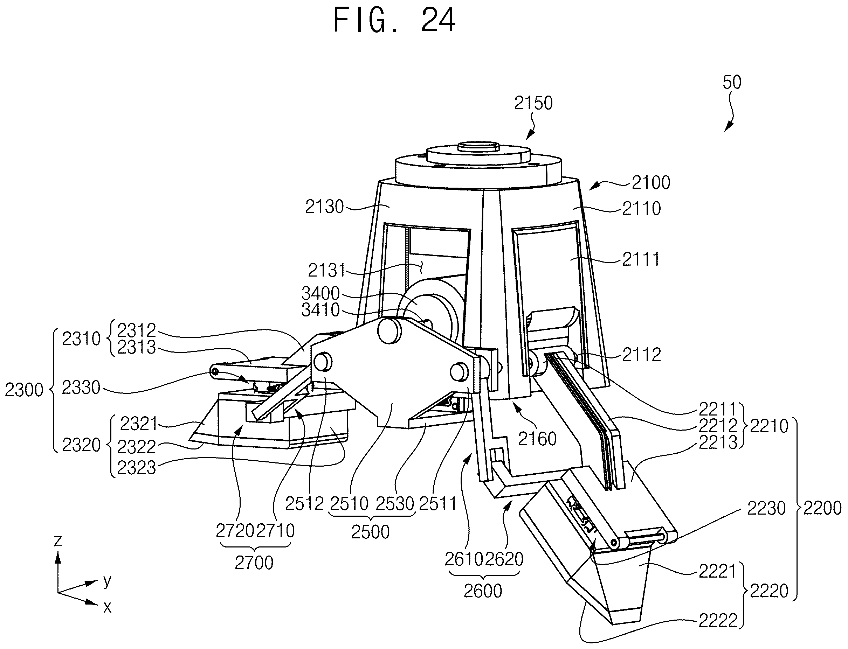

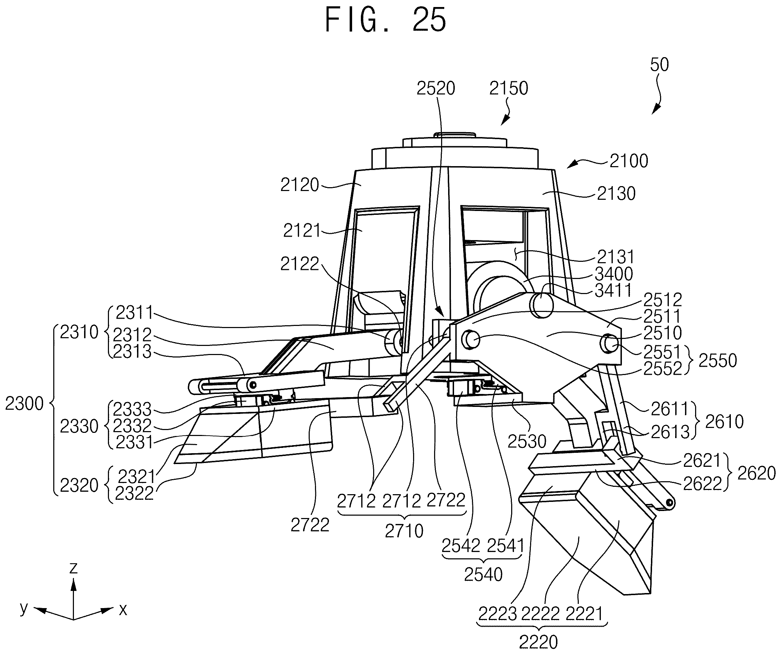

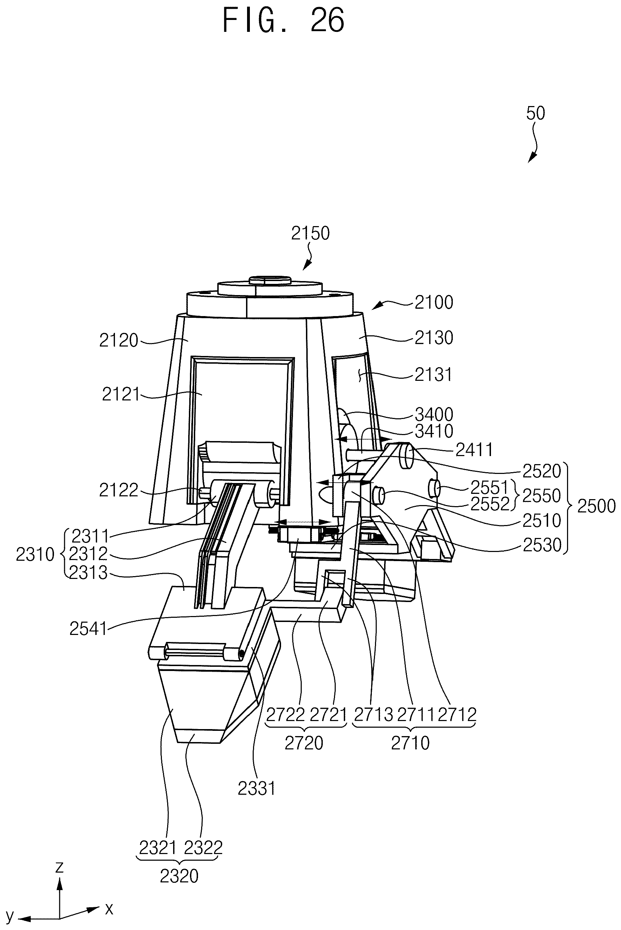

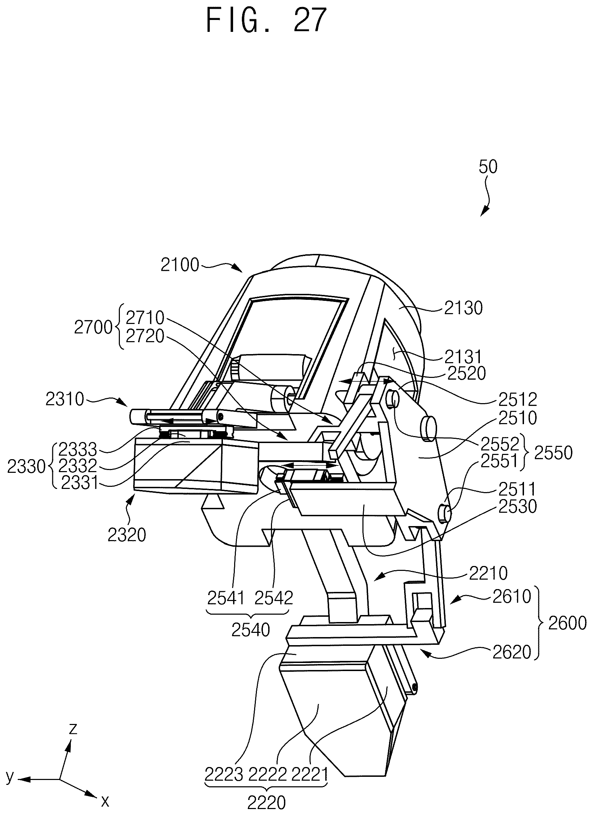

FIG. 24 is a perspective view illustrating a gripper according to still another example embodiment of the present invention. FIG. 25 is a perspective view illustrating the gripper of FIG. 24 from another direction. FIG. 26 and FIG. 27 are perspective views illustrating the gripper of FIG. 24 from still another direction.

Referring to FIGS. 24 to 27, the gripper 50 according to the present example embodiment comprises a body portion 2100, first and second support units 2200 and 2300, a driving unit 3400, a transfer unit 2500, and first and second link units 2600 and 2700.

The body portion 2100 forms a body of the gripper 50 and, as illustrated, may have an overall rectangular block shape. Accordingly, the body portion 2100 may include four side surfaces 2110, 2120, 2130, and 2140, and a coupling portion having a predetermined fastening structure may be formed on an upper surface 2150.

By the coupling portion formed on the upper surface 2150, the gripper 50 may be mounted to, although not illustrated, a robot arm, a manipulator, or the like, and a predetermined operation may be implemented.

Although an overall shape of the body portion 2100 may be variously modified, considering structural characteristics of the gripper 50 according to the present example embodiment, it is required that the first and second support units 2200 and 2300 are connected along the first direction X, the driving unit 3400 is disposed along the second direction Y perpendicular to the first direction X, and the upper surface 2150 is formed along the third direction Z perpendicular to the first and second directions X and Y. Therefore, as long as such structural features are satisfied, the shape of the body portion 2100 is not particularly limited. However, for convenience of description, the body portion 2100 will be described as including the first to fourth side surfaces 2110, 2120, 2130, and 2140.

The first support unit 2200 is connected to a first coupling surface 2111 of the first side surface 2110 of the body portion 2100 and extends in a positive first direction +X, and comprises a first gripping drive portion 2210, a first gripping portion 2220, and a first sliding portion 2230.

In this case, while being connected to a first coupling shaft 2112 of the first coupling surface 2111, the first support unit 2200 rotates with respect to the body portion 2100 about the second direction Y as a rotation axis. Thus, when the first support unit 2200 rotates inward toward the body portion 2100 as a whole, an object is gripped together with the second support unit 2300, and when the first support unit 2200 rotates outward away from the body portion 2100 as a whole, a gripping state of the gripped object is released.

Specifically, the first gripping drive portion 2210 is connected to the first coupling shaft 2112 and rotates about the second direction Y with respect to the first coupling shaft 2112. Although not illustrated, the first coupling shaft 2112 may be rotationally driven by a separate drive source.

That is, the first gripping drive portion 2210 comprises a first rotation shaft 2211 rotatably connected to the first coupling shaft 2112, a first extension shaft 2212 extending from the first rotation shaft 2211 by a predetermined length toward an outside of the body portion 2100, and a first connection plate 2213 formed at an end of the first extension shaft 2212.

In this case, a length of the first extension shaft 2212 may be variously designed, and as illustrated, in order to more easily perform gripping of an object, an end of the first extension shaft 2212 may extend while being bent by a predetermined angle in a direction toward an inside of the body portion 2100.

The first connection plate 2213 is connected to the end of the first extension shaft 2212 and has a plate shape having a predetermined area. Since the first gripping portion 2220 should be formed with a predetermined area for gripping an object, the first connection plate 2213 may be formed to have a predetermined area in consideration of an area of the first gripping portion 2220.

Meanwhile, the first gripping drive portion 2210 does not perform separate sliding driving or vibration, other than driving to rotate about the second direction Y as the rotation axis. In addition, a rotation range about the second direction Y may be limited to an appropriate range in consideration of a structure of the body portion 2100 and a position of the second gripping drive portion 2310.

The first gripping portion 2220 is connected to the first connection plate 2213 via the first sliding portion 2230 to be described later, and grips an object together with the second support unit 2300.

Specifically, the first gripping portion 2220 comprises a first support block 2221 and a first gripping surface 2222. The first support block 2221 is connected to a lower surface of the first connection plate 2213 via the first sliding portion 2230, and has an overall block shape. In this case, since the first support block 2221 corresponds to a block that substantially grips an object, the first support block 2221 should be partially deformable depending on a shape or structure of the object. To this end, the first support block 2221 may be formed as a flexible block.

Alternatively, the first support block 2221 may be implemented as a variable-control block having variable stiffness. Thus, stable gripping may be performed by varying stiffness of the first support block 2221 in consideration of a structure or shape of an object to be gripped by the first gripping portion 2220.

The first gripping surface 2222 is formed on a lower surface of the first support block 2221 and corresponds to a surface that directly contacts the object. Accordingly, the first gripping surface 2222 may include a flexible material like the first support block 2221 and may be formed of a material having relatively high adhesiveness for stable gripping of the object.

In this case, the second support block 2321 may be configured as a variable-stiffness controllable block. Accordingly, by varying the stiffness of the second support block 2321 in consideration of the structure or shape of an object to be gripped through the second gripping portion 2320, stable gripping of the object may be achieved.

Meanwhile, the first gripping portion 2220 slides and vibrates relative to the first gripping drive portion 2210. That is, the first sliding portion 2230 is interposed between the lower surface of the first connection plate 2213 and an upper surface of the first support block 2221 to allow the sliding movement.

In this case, since a detailed shape of the first sliding portion 2230 is substantially the same as that of a second sliding portion 2330 to be described later, it will be described later based on the second sliding portion 2330 illustrated in FIG. 25.

As described above, the first support unit 2200 extends to a first side of the body portion 2100 and grips an object together with the second support unit 2300. In addition, the first gripping portion 2220 receives an external force from the driving unit 3400 to be described later and performs reciprocating sliding driving, that is, vibration, along the second direction Y relative to the first gripping drive portion 2210.

The second support unit 2300 has the same structure as the first support unit 2200, except that it is disposed symmetrically with respect to a center of the body portion 2100.

More specifically, the second support unit 2300 is connected to a second coupling surface 2121 of the second side surface 2120 of the body portion 2100 and extends in a negative first direction -X, and includes a second gripping drive portion 2310, a second gripping portion 2320, and the second sliding portion 2330.

In this case, while being connected to a second coupling shaft 2122 of the second coupling surface 2121, the second support unit 2300 rotates with respect to the body portion 2100 about the second direction Y as the rotation axis. Thus, when the second support unit 2300 rotates inward toward the body portion 2100 as a whole, an object is gripped together with the first support unit 2200, and when the second support unit 2300 rotates outward away from the body portion 2100 as a whole, a gripping state of the gripped object is released.

Specifically, the second gripping drive portion 2310 is connected to the second coupling shaft 2122 and rotates about the second direction Y with respect to the second coupling shaft 2122. Although not illustrated, the second coupling shaft 2122 may be rotationally driven by a separate drive source.

That is, the second gripping drive portion 2310 comprises a second rotation shaft 2311 rotatably connected to the second coupling shaft 2122, a second extension shaft 2312 extending from the second rotation shaft 2311 by a predetermined length toward an outside of the body portion 2100, and a second connection plate 2313 formed at an end of the second extension shaft 2312.

In this case, a length of the second extension shaft 2312 may be variously designed, and as illustrated, an end of the second extension shaft 2312 may extend while being bent by a predetermined angle in a direction toward an inside of the body portion 2100.

The second connection plate 2313 is connected to the end of the second extension shaft 2312 and has a plate shape having a predetermined area, and may be formed with substantially the same area as the first connection plate 2213.

Meanwhile, the second gripping drive portion 2310 does not perform separate sliding driving or vibration, other than driving to rotate about the second direction Y as the rotation axis. In addition, a rotation range about the second direction Y may be limited to an appropriate range in consideration of a structure of the body portion 2100 and a position of the second gripping drive portion 2310.

The second gripping portion 2320 is connected to the second connection plate 2313 via the second sliding portion 2330 and grips an object together with the first support unit 2200.

Specifically, the second gripping portion 2320 comprises a second support block 2321 and a second gripping surface 2322. The second support block 2321 is connected to a lower surface of the second connection plate 2313 via the second sliding portion 2330 and has an overall block shape. In this case, like the first support block 2221 described above, the second support block 2321 may be formed as a flexible block.

The second gripping surface 2322 is formed on a lower surface of the second support block 2321 and corresponds to a surface that directly contacts the object. Likewise, the second gripping surface 2322 may include a flexible material and may be formed of a material having relatively high adhesiveness for stable gripping of the object.

Meanwhile, the second gripping portion 2320 slides and vibrates relative to the second gripping drive portion 2310. That is, the second sliding portion 2330 is interposed between the lower surface of the second connection plate 2313 and an upper surface of the second support block 2321 to allow the sliding movement.

The second sliding portion 2330 comprises a second fixed plate 2331, a second slider 2332, and a second sliding guide 2333.

The second fixed plate 2331 is formed on the upper surface of the second support block 2321 and has a plate structure with a predetermined area. In this case, unlike the second support block 2321, the second fixed plate 2331 does not include a flexible material and maintains its shape as a plate structure having high rigidity.

The second slider 2332 is fixed on the second fixed plate 2331 and is slidably driven along the second sliding guide 2333. In this case, the second sliding guide 2333 is fixed to the lower surface of the second connection plate 2313, extends along the second direction Y on the lower surface of the second connection plate 2313, and guides a sliding direction of the second slider 2332 along the second direction Y.

That is, the second slider 2332 slides along the second sliding guide 2333 in the second direction Y. Since the second slider 2332 is fixed to the second fixed plate 2331 and the second fixed plate 2331 is fixed to the second gripping portion 2320, as the second slider 2332 slides along the second direction Y, the second gripping portion 2320 also slides along the second direction Y.

Accordingly, the second gripping portion 2320, the second fixed plate 2331, and the second slider 2332 integrally slide along the second direction Y relative to the second connection plate 2313. In this case, the sliding movement is reciprocating, and thus the second gripping portion 2320 vibrates along the second direction Y relative to the second gripping drive portion 2310.

The same applies to the first sliding portion 2230 described above. As the first sliding portion 2230 is interposed between the first gripping drive portion 2210 and the first gripping portion 2220, the first gripping portion 2220 vibrates along the second direction Y relative to the first gripping drive portion 2210.

As described above, the second support unit 2300 extends to a second side of the body portion 2100 and grips an object together with the first support unit 2200. In addition, the second gripping portion 2320 receives an external force from the driving unit 3400 to be described later and performs reciprocating sliding driving, that is, vibration, along the second direction Y relative to the second gripping drive portion 2310. In such vibration, the first gripping portion 2220 and the second gripping portion 2320 vibrate together in the same manner. To this end, the first and second gripping portions 2220 and 2320 are connected such that they are constrained with each other by the transfer unit 2500 and the link units 2600 and 2700 to be described later.

The driving unit 3400 is provided in the body portion 2100. In the drawings, the driving unit 3400 is illustrated as being disposed through an interior of the body portion 2100. That is, the driving unit 3400 is illustrated as being positioned in an opening 2131 formed in the third side surface 2130 of the body portion 2100. However, the present disclosure is not limited thereto, and it is sufficient that vibration is generated along the second direction Y in the body portion 2100.

The driving unit 3400 includes a vibration shaft 3410 extending along the second direction Y along a center of the driving unit 3400, and generates a driving force such that the vibration shaft 3410 vibrates along the second direction Y.

The vibration shaft 3410 extends along the second direction Y, protrudes from the third side surface 2130 of the body portion 2100, and the transfer unit 2500 is fixed on the vibration shaft 3410.

As illustrated, the transfer unit 2500 is positioned at a front end of the third side surface 2130 of the body portion 2100 and comprises a front frame 2510, a rear frame 2520, a connection frame 2530, a central sliding portion 2540, and a link guide portion 2550. The transfer unit 2500 integrally transfers vibration of the driving unit 3400 to the first and second support units 2200 and 2300. To this end, the driving unit 3400 and the first and second support units 2200 and 2300 are integrally connected to the transfer unit 2500.

The front frame 2510 is positioned at the front end of the third side surface 2130 of the body portion 2100 and has a plate structure having a predetermined area extending along an XZ plane. In this case, as illustrated, the front frame 2510 may have an overall diamond shape, and through edges thereof, the driving unit 3400 and the first and second support units 2200 and 2300 may be connected. However, the shape of the front frame 2510 is not limited to the diamond shape, and any structure allowing the driving unit 3400 and the first and second support units 2200 and 2300 to be integrally connected is sufficient.

Accordingly, an end 3411 of the vibration shaft 3410 is fixed at an upper central portion of the front frame 2510. Thus, as the vibration shaft 3410 vibrates along the second direction Y, the front frame 2510 also vibrates along the second direction Y.

In addition, the first link unit 2600 and the second link unit 2700 are respectively connected to a first side surface 2511 and a second side surface 2512 of the front frame 2510.

In this case, in order to stably fix the first and second link units 2600 and 2700 and to guide sliding, that is, vibration, of the first and second link units 2600 and 2700 along the second direction Y, the rear frame 2520 and the link guide portion 2550 are provided.

The rear frame 2520 extends by a predetermined length along the first direction X. In this case, a length of the rear frame 2520 extending along the first direction X may be similar to a length between both side edges of the front frame 2510 along the first direction X.

Accordingly, a first link guide 2551 of the link guide portion 2550 is coupled along the second direction Y to a first side surface of the rear frame 2520 and the first side surface 2511 of the front frame 2510, and a first link portion 2610 of the first link unit 2600 is connected between the front frame 2510 and the rear frame 2520 through the first link guide 2551.

In addition, a front end of the first link guide 2551 may be partially exposed to the outside of the front frame 2510, and a rear end of the first link guide 2551 is fixed to a lower edge of a first side of the third side surface 2130 of the body portion 2100. Thus, the first link guide 2551 functions as a sliding guide extending along the second direction Y, and the front frame 2510, the rear frame 2520, and the first link unit 2600 slide, that is, vibrate, along the second direction Y along the first link guide 2551.

Meanwhile, a second link guide 2552 of the link guide portion 2550 is coupled along the second direction Y to a second side surface of the rear frame 2520 and the second side surface 2512 of the front frame 2510, and a second link portion 2710 of the second link unit 2700 is connected between the front frame 2510 and the rear frame 2520 through the second link guide 2552.

In addition, a front end of the second link guide 2552 may be partially exposed to the outside of the front frame 2510, and a rear end of the second link guide 2552 is fixed to a lower edge of a second side of the third side surface 2130 of the body portion 2100. Thus, the second link guide 2552 functions as a sliding guide extending along the second direction Y, and the front frame 2510, the rear frame 2520, and the second link unit 2700 slide, that is, vibrate, along the second direction Y along the second link guide 2552.

As described above, as the link guide portion 2550 is fixed and extends on both side portions of the transfer unit 2500, the transfer unit 2500, which is fixed to the vibration shaft 3410 and slides, that is, vibrates, along the second direction Y according to excitation of the driving unit 3400, is stably guided by the link guide portion 2550 together with the first and second link units 2600 and 2700, and vibrates along the second direction Y.

Meanwhile, the connection frame 2530 guides sliding at a lower portion of the transfer unit 2500. That is, a first end of the connection frame 2530 is connected to a lower portion of the front frame 2510 and extends along the second direction Y toward a bottom surface 2160 of the body portion 2100.

In this case, the central sliding portion 2540 is provided on the bottom surface of the body portion 2100. The central sliding portion 2540 comprises a central sliding guide 2541 and a central slider 2542.

The central sliding guide 2541 is fixed to the bottom surface 2160 of the body portion 2100 and guides sliding movement of the central slider 2542 along the second direction Y. A lower surface of the central slider 2542 is fixed to a second end of the connection frame 2530, and an upper surface of the central slider 2542 is movably coupled to the central sliding guide 2541. Accordingly, the central slider 2542 and the connection frame 2530 slide along the second direction Y along the central sliding guide 2541.

Accordingly, in the transfer unit 2500, when the front frame 2510 has a diamond shape, and vibration is applied along the second direction Y by the vibration shaft 3410 connected to an upper portion, both side surfaces 2511 and 2512 are guided in movement along the second direction Y by the link guide portion 2550, and a lower portion is guided by the central sliding portion 2540. Thus, in a state in which all four corners are stably supported, the transfer unit 2500 vibrates along the second direction Y according to vibration of the driving unit 3400.

In this case, since the first and second link units 2600 and 2700 are respectively connected to both side surfaces 2511 and 2512 of the transfer unit 2500, the first and second link units 2600 and 2700 also stably perform vibration along the second direction Y together with the transfer unit 2500.

Further, since the first and second link units 2600 and 2700 are finally connected to the first and second gripping portions 2220 and 2320, vibration of the transfer unit 2500 is transmitted to the first and second gripping portions 2220 and 2320 such that the first and second gripping portions 2220 and 2320 also vibrate along the second direction Y.

Hereinafter, detailed connection states of the first and second link units 2600 and 2700 will be described.

The first link unit 2600 comprises a first link portion 2610 and a first extension portion 2620. The first link portion 2610 is a link extending between the transfer unit 2500 and the first extension portion 2620, and the first extension portion 2620 is a link extending between the first link portion 2610 and the first gripping portion 2220.

The first link portion 2610 comprises a first link 2611, a first end portion 2612, and a first branch portion 2613. The first end portion 2612 is connected to the first link guide 2551 and is rotatably connected to the first link guide 2551 about the second direction Y as a rotation axis. Accordingly, the first link portion 2610 may rotate relative to the first side surface 2511 of the transfer unit 2500 about the second direction Y as a rotation axis.

The first link 2611 is a frame extending from the first end portion 2612 by a predetermined length, and the first branch portion 2613 is formed at a second end of the first link 2611. As illustrated, the first branch portion 2613 branches into a pair from the first link 2611 and provides a structure for connection of the first extension portion 2620. However, the first link 2611 is not necessarily limited to having the first branch portion 2613, and any structure that allows connection to the first extension portion 2620 is sufficient.

The first extension portion 2620 comprises a first extension coupling portion 2621 and a first extension frame 2622, and extends overall along the second direction Y. That is, the first extension coupling portion 2621 is rotatably connected to the first branch portion 2613 about the second direction Y as a rotation axis. In addition, the first extension frame 2622 extends in a direction perpendicular to the first extension coupling portion 2621 and has a frame structure extending along the second direction Y. Thus, the first extension frame 2622 is fixed along the second direction Y on a first upper surface 2223 of the first support block 2221.

That is, the first extension portion 2620 has an overall L-shape and extends in a direction perpendicular to an extending direction of the first link portion 2610 to be fixed on the first support block 2221. In this case, the first extension portion 2620 is integrally fixed on the first upper surface 2223 of the first support block 2221, and thus a driving state of the first extension portion 2620 is transmitted to the first gripping portion 2220 as it is.

As a result, when the transfer unit 2500 vibrates along the second direction Y, the first gripping portion 2220 also vibrates along the second direction Y together with the first link unit 2600. However, the first gripping portion 2220 rotates about the second direction Y as the rotation axis to approach the second gripping portion 2320 for gripping an object. To allow such posture variation of the first gripping portion 2220, the first link unit 2600 has a structure in which the first link portion 2610 and the first extension portion 2620 are coupled to be relatively rotatable about the second direction Y as the rotation axis.

Through the above connection structure, when the first gripping portion 2220 varies its posture for gripping an object, interference by the first link unit 2600 is minimized, while a vibration state of the first link unit 2600 along the second direction Y is transmitted to the first gripping portion 2220 as it is.

A connection structure between the first side surface 2511 of the transfer unit 2500 and the first gripping portion 2220 via the first link unit 2600 is the same in the second link unit 2700.

That is, the second link unit 2700 also comprises a second link portion 2710 and a second extension portion 2720. The second link portion 2710 is a link extending between the transfer unit 2500 and the second extension portion 2720, and the second extension portion 2720 is a link extending between the second link portion 2710 and the second gripping portion 2320.

The second link portion 2710 includes a second link 2711, a second end portion 2712, and a second branching portion 2713. The second end portion 2712 is connected to the second link guide 2552 and is rotatably connected to the second link guide 2552 with the second direction Y as a rotation axis. Accordingly, the second link portion 2710 is configured to be relatively rotatable with respect to the other side surface 2512 of the transmission unit 2500 about the second direction Y as a rotation center axis.

The second link 2711 is a frame extending a predetermined length from the second end portion 2712, and the second branching portion 2713 is formed at a second end of the second link 2711. The structure and connection relationship of the second branching portion 2713 are the same as those of the first branching portion 2613.

The second extension portion 2720 includes a second extension coupling portion 2721 and a second extension frame 2722, and extends overall along the second direction Y. That is, the second extension coupling portion 2721 is rotatably connected to the second branching portion 2713 with the second direction Y as a rotation center axis. In addition, the second extension frame 2722 extends in a direction perpendicular to the second extension coupling portion 2721 and has a frame structure extending along the second direction Y. Accordingly, the second extension frame 2722 is fixed on a second upper surface 2323 of the second support block 2321 along the second direction Y.

That is, the second extension portion 2720 has an overall L-shaped configuration and extends in a direction perpendicular to an extension direction of the second link portion 2710, and is fixed on the second support block 2321. In this case, since the second extension portion 2720 is integrally fixed on the second upper surface 2323 of the second support block 2321, an operating state of the second extension portion 2720 is directly transmitted to the second gripping portion 2320.

As a result, when the transmission unit 2500 vibrates along the second direction Y, the second gripping portion 2320 also vibrates along the second direction Y together with the second link unit 2700. However, since the second gripping portion 2320 rotates about the second direction Y as a rotation center axis and approaches the first gripping portion 2220 in order to grip an object, the second link unit 2700 has a structure in which the second link portion 2710 and the second extension portion 2720 are rotatably coupled to each other about the second direction Y as a rotation center axis, such that a posture of the second gripping portion 2320 is variable.

That is, through the above-described connection structure, when the second gripping portion 2320 changes its posture for gripping an object, interference by the second link unit 2700 is minimized, and a vibration state of the second link unit 2700 along the second direction Y is directly transmitted to the second gripping portion 2320.

Accordingly, when the first and second gripping portions 2220 and 2320 grip an object and the driving unit 3400 generates vibration, the first and second gripping portions 2220 and 2320 and the object fixed thereby vibrate along the second direction Y, which is a vibration direction of the driving unit 3400. Such a vibration state will be described below with reference to the accompanying drawings.

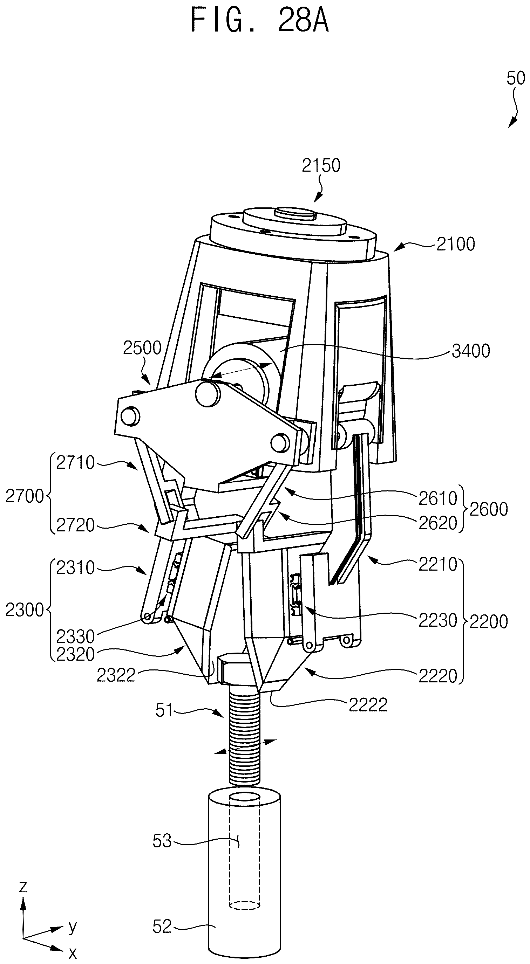

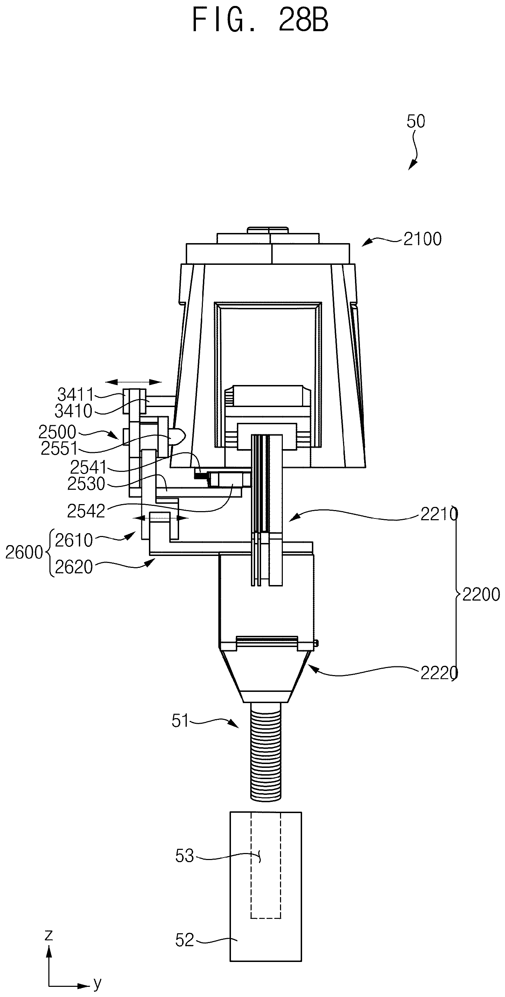

FIG. 28A and FIG. 28B are a perspective view and a side view illustrating a state in which vibration is applied and an object is coupled to a target coupling portion while being gripped by the gripper of FIG. 24.

Referring to FIG. 28A and FIG. 28B, the first and second gripping portions 2220 and 2320 approach the object 51 and grip the object 51 as the first and second gripping drive portions 2210 and 2310 rotate about the second direction Y as a rotation axis. At this time, as described above, the first and second link units 2600 and 2700 connected to the first and second gripping portions 2220 and 2320 do not cause interference with or impose limitations on the gripping operation of the object 51 resulting from the rotation of the first and second gripping portions 2220 and 2320.

Thereafter, in order to insert the object 51 into an opening hole 53 of a counterpart fastening portion 52 positioned below, in the conventional art, it is necessary to finely control the position of the gripper 50 gripping the object 51 such that the object 51 is accurately inserted into the opening hole 53.

However, in the present example embodiment, by controlling the first and second gripping portions 2220 and 2320 gripping the object 51 to vibrate along the second direction Y, alignment in at least the second direction Y may be omitted when inserting the object 51 into the opening hole 53. That is, when the object 51 vibrates with a predetermined frequency in the second direction Y due to vibration of the first and second gripping portions 2220 and 2320, the object 51 may be automatically aligned and inserted without separate alignment along the second direction Y during insertion into the opening hole 53.

Accordingly, in the gripper 50 according to the present example embodiment, not only may a specific object be gripped, but also, when the gripped object is inserted into or fixed to a counterpart fastening portion, alignment may be omitted at least in a direction identical to the vibration direction of the object, thereby enabling precise fastening without requiring precise control of the gripper 50.

At this time, vibration of the first and second gripping portions 2220 and 2320 is achieved because, as described above, vibration generated by the driving unit 3400 is transmitted to the first and second gripping portions 2220 and 2320 via the transmission unit 2500 and the first and second link units 2600 and 2700, respectively.

In addition, as described above, the first and second support blocks 2221 and 2321 may have a variable-stiffness structure. Accordingly, when the first and second gripping portions 2220 and 2320 grip the object 51, the stiffness may be controlled to be relatively low such that the support blocks deform in accordance with the shape or structure of the object 51, thereby inducing stable gripping of the object 51.

Thereafter, after gripping the object 51, the stiffness of the first and second support blocks 2221 and 2321 may be increased so that vibration is more effectively transmitted to the object 51. That is, in order for vibration of the first and second gripping portions 2220 and 2320 to be transmitted integrally to the object 51, the stiffness of the support blocks should be controlled to be high, and through this, fastening of the object 51 to the counterpart fastening portion 52 may be facilitated more easily.

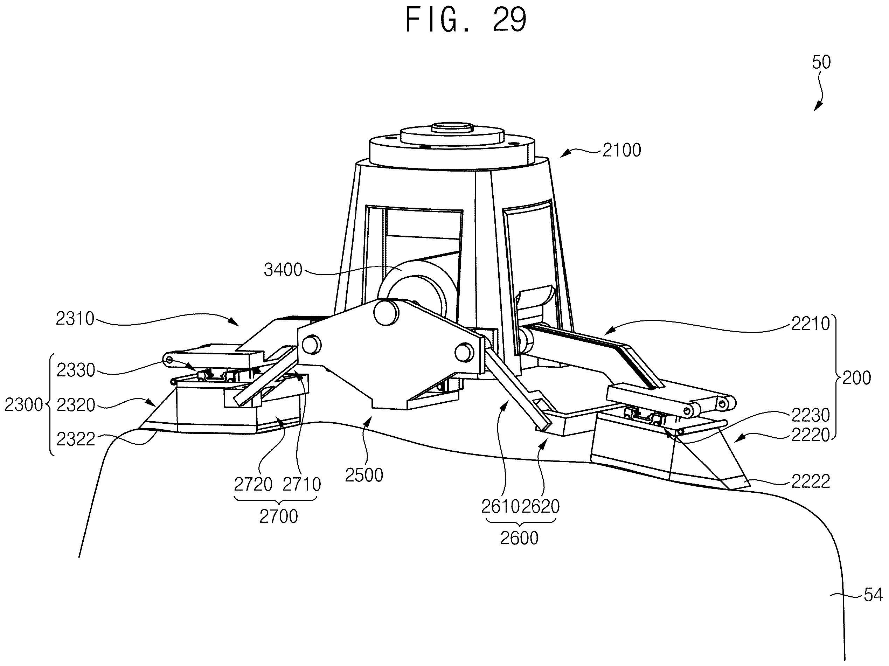

FIG. 29 is a perspective view illustrating a state in which another object is gripped using the gripper of FIG. 24.

Referring to FIG. 29, in the gripper 50 according to the present example embodiment, when separate vibration is not applied via the driving unit 3400, it is also possible to grip a relatively large object 54.

That is, although not illustrated in detail, openings are formed in the first gripping surface 2222 of the first gripping portion 2220 and the second gripping surface 2322 of the second gripping portion 2320, and the openings may be connected to a separate negative-pressure generating unit. Accordingly, the first and second gripping surfaces 2222 and 2322 provide suction force to a surface of the object 54, and thus the object 54 may be gripped by the first and second gripping portions 2220 and 2320 by the suction force.

As a result, when the object 54 is a relatively very large object, the first and second support units 2200 and 2300 may grip the object 54 by suction force while being rotated about the second direction Y and positioned relatively far apart, as illustrated. In this case, the driving unit 3400 as well as the first and second link units 2600 and 2700 do not cause interference with or obstruction to posture variation of the first and second gripping portions 2220 and 2320 into a gripping state with respect to the object 54.

Rather, since the first and second gripping portions 2220 and 2320 are more stably fixed to the body portion 2100 via the first and second link units 2600 and 2700 and the transmission unit 2500 while allowing posture variation, even when gripping an object 54 having a relatively large volume or weight, the postures of the first and second gripping portions 2220 and 2320 may be stably maintained.

According to some exemplary embodiments of the present invention, by generating vibration in the assembly target object, during a process of coupling the assembly target object to the coupling portion, coupling may be induced while allowing the assembly target object to naturally find an appropriate position by itself without performing a separate alignment operation between the assembly target object and the coupling portion.

Accordingly, particularly for assembly structures in which very fine alignment in a specific direction is required, such as between the assembly target object and the coupling portion, coupling may be easily performed by applying vibration in a direction in which alignment is difficult, while omitting precise alignment.

In this case, by applying vibration not only in a vertical direction corresponding to a third direction but also in a second direction, accurate and easy coupling may be performed without precisely performing alignment along both the third and second directions when coupling the assembly target object to the coupling portion.

As a result, not only assembly target objects having elongated coupling surfaces, but also assembly target objects having rectangular or square coupling surfaces may be immediately and easily coupled without performing separate alignment with respect to the coupling portion, thereby enabling implementation of a system in which coupling is automatically achieved by locating an appropriate position during assembly using the gripper.

Meanwhile, while vibration is performed in the vertical direction to omit a separate alignment operation, the assembly target object may be transferred in a scanning manner in a horizontal direction corresponding to the second direction for alignment, thereby effectively performing alignment at coupling surfaces between the coupling portion and the assembly target object.

In particular, since the vibration generating unit is an electromagnetic-force-based exciter, a displacement corresponding to a force offset by an electromagnetic force may be induced when an external force is applied. Accordingly, even when an external force is generated while the assembly target object is coupled to the coupling portion, the external force may be offset and a vibration displacement may be naturally reduced, thereby minimizing damage or breakage of the vibration generating unit and the gripper.

Further, since a transmission unit is interposed between the gripping unit and the vibration generating unit, vibration generated by the vibration generating unit is transmitted to the gripping unit. In addition, since the gripping unit includes a slide and a guide frame such that a gripping portion configured to grip the assembly target object vibrates in the vertical direction corresponding to the third direction, vibration of the gripper may be effectively implemented.

In addition, the vibration generating unit may include first and second excitation portions configured to generate vibration in different phases. Accordingly, when only alignment in the vertical direction corresponding to the third direction is required, vibration may be generated in an identical phase, and when alignment in a roll direction in addition to the vertical direction is required, vibration may be generated in different phases, thereby inducing natural alignment through rotation. As a result, effective alignment and coupling may be induced even when the assembly target object and the coupling portion are positioned in different orientations.

In this case, vibration having different phases may be effectively transmitted to the gripping unit through the transmission unit. Since the transmission unit has a triangular shape and is connected to a pair of gripping portions of the gripping unit, vibration having different phases may be induced in the gripping portions, thereby inducing rotation of the assembly target object in the roll direction and facilitating alignment through rotation.

Furthermore, since a pair of gripping units extend from both sides of a body portion to grip an object located at a center, various objects may be effectively gripped regardless of sizes or shapes of the objects. In addition, while gripping the object, the gripping units vibrate due to vibration generated by the vibration generating unit, and through such vibration, effective coupling may be performed while omitting precise alignment of the object with respect to a target coupling portion.

Further, since the vibration generating unit is provided at a center of the body portion and vibration generated by a single vibration generating unit is transmitted simultaneously to link units on both sides through the transmission unit, vibration may be transmitted to gripping portions on both sides at an identical frequency. Accordingly, vibration may be induced in the object while maintaining overall gripping stability in a state in which the gripping portions grip the object.

As described above, through a gripping unit that rotates about a second direction as a rotation center axis and a gripping unit that vibrates along the second direction, effective gripping of objects having various shapes and sizes may be achieved. In addition, by applying vibration to the object, the object may be accurately fastened to a predetermined target coupling portion while omitting precise alignment to a certain extent.

Having described exemplary embodiments of the present invention, it is further noted that it is readily apparent to those of reasonable skill in the art that various modifications may be made without departing from the spirit and scope of the invention which is defined by the metes and bounds of the appended claims.

## Claims

1. A gripper comprising:
a vibration generating unit configured to generate vibration; and
a gripping unit configured to grip an assembly target object,
wherein, in a state in which the assembly target object and the gripping unit vibrate due to vibration generated by the vibration generating unit, the assembly target object is self-aligned with a coupling portion and coupled to the coupling portion.

2. The gripper of claim 1, wherein the assembly target object is transferred in a first direction toward the coupling portion to be coupled to the coupling portion, and vibrates in a third direction.

3. The gripper of claim 2, wherein, while vibrating in the third direction, the assembly target object is transferred in a second direction such that alignment in a horizontal direction with respect to the coupling portion is performed.

4. The gripper of claim 1, wherein the vibration generating unit generates vibration simultaneously in second and third directions perpendicular to each other, and the assembly target object is transferred in the first direction to be coupled to the coupling portion while vibrating simultaneously in the second and third directions.

5. The gripper of claim 1, wherein the vibration generating unit is an electromagnetic-force-based exciter, and a displacement corresponding to a force offset by an electromagnetic force is induced when an external force is applied.

6. The gripper of claim 1, further comprising:
a transmission unit connected between the vibration generating unit and the gripping unit and configured to transmit vibration generated by the vibration generating unit to the gripping unit.

7. The gripper of claim 6, wherein the transmission unit comprises:
a coupling frame connected to the vibration generating unit;
a central frame connected to the gripping unit; and
an inclined frame connecting the coupling frame and the central frame.

8. The gripper of claim 7, wherein the inclined frame comprises a pair of inclined frames symmetric to each other, such that the transmission unit has an overall triangular frame shape.

9. The gripper of claim 7, wherein the gripping unit comprises:
a guide frame extending in the third direction;
a slide sliding along the guide frame; and
a gripping portion configured to grip the assembly target object, fixed to the slide to vibrate in the third direction, and fixed to the central frame.

10. The gripper of claim 6, wherein the vibration generating unit comprises a pair of first and second excitation portions configured to independently generate vibration.

11. The gripper of claim 10, wherein, when the first and second excitation portions generate vibration in an identical phase, the assembly target object vibrates only in a vertical direction and is coupled to the coupling portion, and
when the first and second excitation portions generate vibration in different phases, the assembly target object rotates about a direction toward the coupling portion as a rotation axis and is coupled to the coupling portion.

12. The gripper of claim 10, wherein the vibration generating unit further comprises a connection frame having a first end connected to a first excitation shaft extending from the first excitation portion and a second end connected to a second excitation shaft extending from the second excitation portion,
wherein the first end and the second end of the connection frame each comprise a rotatable flexible joint.

13. The gripper of claim 12, wherein the transmission unit comprises:
a coupling frame connected to the connection frame;
a central frame connected to the gripping unit and having a pair of first and second openings; and
first and second rollers coupled to the first and second openings, respectively, and having positions variable within the first and second openings.

14. The gripper of claim 1, further comprising:
a link unit configured to transmit vibration of the vibration generating unit to the gripping unit; and
a transmission unit connecting the vibration generating unit and the link unit,
wherein the vibration generating unit is provided in a body portion, and a pair of gripping units are connected to both sides of the body portion, respectively.

15. The gripper of claim 14, wherein each gripping unit comprises:
a gripping drive portion extending from the body portion;
a gripping portion configured to grip an object; and
a sliding portion provided between the gripping drive portion and the gripping portion and configured to guide vibration of the gripping portion.

16. The gripper of claim 14, wherein the transmission unit comprises:
a front frame to which the vibration generating unit and the link unit are connected;
a connection frame extending rearward from the front frame;
a central sliding portion provided between the connection frame and the body portion and configured to guide vibration of the connection frame; and
a link guide portion connecting both sides of the front frame and the link unit, fixed to the body portion, and configured to guide vibration of the front frame and the link unit.

17. The gripper of claim 14, wherein the link unit comprises:
a link portion rotatably connected to the transmission unit; and
an extension portion connected between the link portion and the gripping unit.

18. A gripper comprising:
a driving unit configured to generate a driving force;
a suspension unit connected to the driving unit and configured to convert the driving force into vibration and transmit the vibration; and
a transmission unit connected to the suspension unit and configured to transmit the vibration to an assembly target object,
wherein, due to the vibration, the assembly target object is aligned with and coupled to a coupling portion while vibrating in a predetermined direction.

19. The gripper of claim 18, wherein the driving unit generates a rotational driving force, and the suspension unit converts the rotational driving force into linear motion and induces vibration of the transmission unit.

20. The gripper of claim 19, wherein the suspension unit comprises:
an adaptive suspension portion connected between the driving unit and the transmission unit; and
a drive guide portion extending from the driving unit and configured to guide a movement direction of the transmission unit.

21. The gripper of claim 20, wherein the adaptive suspension portion comprises:
a first connection portion connected to a crank portion of the driving unit;
a second connection portion connected to the transmission unit; and
an absorption portion extending between the first and second connection portions and configured to absorb an external force transmitted from the transmission unit.

22. The gripper of claim 1, further comprising:
a fixing module configured to fix the assembly target object to an excitation portion that receives vibration from the vibration generating unit,
wherein the fixing module comprises a flexible fixing portion configured to bring the assembly target object into close contact with a lower surface of the excitation portion.

23. The gripper of claim 22, wherein the flexible fixing portion extends from a first side of the excitation portion and is fixed to an insertion portion formed on a second side of the excitation portion, and is configured to absorb vibration of the assembly target object and fix the assembly target object.

24. An assembly method comprising:
gripping an assembly target object and transferring the assembly target object to a target fastening position;
contacting the assembly target object with a coupling portion in a first direction while vibrating the assembly target object;
transferring and scanning a gripping portion in a second direction;
reducing a vibration displacement in a third direction in accordance with fastening of the assembly target object to the coupling portion; and
completing fastening and releasing gripping of the assembly target object.
